# EUROPEAN PATENT APPLICATION

(11) **EP 4 178 213 A1**
(43) Date of publication of application: **10.05.2023**
(21) Application number: 21846980.7
(22) Date of filing: 09.07.2021
(51) Int. Cl.: H04N 21/431

(54) **METHOD FOR DISPLAYING MULTIPLE WINDOWS AND ELECTRONIC DEVICE**

(30) Priority: 21.07.2020 CN 202010707799
(71) Applicant: Huawei Technologies Co., Ltd., Longgang District, Shenzhen, Guangdong 518129 (CN)
(72) Inventor: ZHONG, Hui, Shenzhen, Guangdong 518129 (CN); XIAO, Xiao, Shenzhen, Guangdong 518129 (CN)
(74) Representative: Maiwald GmbH
(86) International application number: PCT/CN2021/105616
(87) International publication number: WO 2022/017205

(57) **Abstract**

This application provides a method for displaying a plurality of windows and an electronic device. The electronic device may be a mobile phone, a tablet computer, a wearable device, or the like. In the method, different window display schemes may be automatically switched based on different scenarios. Specifically, a plurality of windows to be displayed on a display are grouped based on at least one of refresh rates of the plurality of windows, a quantity of the windows, sizes of the windows, locations, and the like, and a lane lane for transmitting window data is allocated to each window group obtained after grouping, so that window data of each window group can be refreshed, drawn, rendered, and presented based on a refresh rate required by the window data, and there is no need to present all the windows at a highest refresh rate. In the method, the plurality of windows can be displayed at lower power consumption without perception by a user, thereby simplifying a window display procedure, lowering power consumption of the electronic device, and improving user experience.

## Description

This application claims priority to Chinese Patent Application No. 202010707799.3, filed with the China National Intellectual Property Administration on July 21, 2020 and entitled "METHOD FOR DISPLAYING PLURALITY OF WINDOWS AND ELECTRONIC DEVICE", which is incorporated herein by reference in its entirety.

### TECHNICAL FIELD

This application relates to the field of terminals and the field of electronic technologies, and in particular, to a method for displaying a plurality of windows and an electronic device.

### BACKGROUND

An electronic device may include a display in a video mode (video mode) and a display in a command mode (command mode). A random access memory (random access memory, RAM) is disposed inside the display in the video mode. The RAM can buffer to-be-displayed screen data sent by the electronic device to the display. Therefore, the display in the command mode can refresh, by using the to-be-displayed screen data stored in the RAM inside the screen, content displayed on the display. No RAM is disposed inside the display in the video mode, and the display in the video mode cannot store to-be-displayed screen data. The electronic device can transmit screen data to the display in real time through a mobile industry processor interface (mobile industry processor interface, MIPI), to refresh content displayed on the display.

Currently, the electronic device may display a plurality of windows on the display. For example, the display of the electronic device displays different interfaces in split areas, or one or more windows hover on an interface of the display to display different interfaces. When different windows display different interfaces, the windows may correspond to different refresh rates. For example, a refresh rate of an interface of a video application may be a frame rate of 60 Hz, and a refresh rate of an interface of a social application or an interface of a news application may be 90 Hz or 120 Hz, to ensure smoother rolling of interface content. Therefore, the plurality of windows of the electronic device may require different refresh rates.

For the display in the video mode (video mode), the electronic device needs to continuously transmit screen data in real time. If different windows are displayed at different refresh rates, in a display process of the display, the electronic device performs uniform refreshing based on a highest refresh rate in refresh rates of the plurality of different windows. For a window with a low refresh rate, even if content displayed on the window does not change, the same screen data needs to be transmitted in real time through the MIPI, to continuously display the content of the window. This process increases system power consumption and performance load of the electronic device.

### SUMMARY

This application provides a method for displaying a plurality of windows and an electronic device. In the method, a plurality of windows may be displayed at lower power consumption without perception by a user, thereby simplifying a window display procedure, lowering power consumption of the electronic device, and improving user experience.

A first aspect provides a method for displaying a plurality of windows. The method is applied to an electronic device including a display, and the method includes: displaying a plurality of windows on the display, where the plurality of windows include a first window and a second window, and a first refresh rate corresponding to the first window is greater than a second refresh rate corresponding to the second window; obtaining to-be-transmitted window data of the first window and to-be-transmitted window data of the second window; determining a first lane set in a plurality of transmission lanes based on the to-be-transmitted window data of the first window and determining a second lane set in the plurality of transmission lanes based on the to-be-transmitted window data of the second window, where the first lane set and the second lane set include different transmission lanes; when a bandwidth of a transmission lane in the first lane set meets a transmission requirement of the window data of the first window, and a bandwidth of a transmission lane in the second lane set meets a transmission requirement of the window data of the second window, transmitting the window data of the first window to the display through the first lane set, and transmitting the window data of the second window to the display through the second lane set; and drawing and displaying the first window on the display based on the first refresh rate and drawing and displaying the second window on the display based on the second refresh rate.

It should be understood that the method for displaying a plurality of windows provided in this embodiment of this application may be applied to a display in a video mode (video mode). In a process of displaying an interface, the display in the video mode (video mode) needs to continuously transmit or receive screen data in real time, to continuously display content of the interface.

It should be further understood that displaying a plurality of windows according to this embodiment of this application may be displaying a plurality of windows in a split-screen manner or displaying a plurality of windows in a picture-in-picture (picture-in-picture, PIP) manner with overlapped windows.

In this embodiment of this application, descriptions are provided by using an example in which two windows (for example, the first window and the second window) are displayed on the display. Other methods for displaying more windows also fall within the protection scope of this application. Details are not described herein. Alternatively, the first window may represent one type of window, and the type of window corresponds to a first refresh rate. The second window may represent another type of window, and the another type of window corresponds to a second refresh rate. This is not limited in this embodiment of this application.

It should be further understood that the first window herein corresponds to the first refresh rate, and the second window herein corresponds to the second refresh rate. In other words, refreshing, layer composition, drawing, rendering, and presentation are performed on the window data of the first window at the first refresh rate, and refreshing, layer composition, drawing, rendering, and presentation are performed on the window data of the second window at the second refresh rate.

According to the method, a process of separately refreshing, drawing, rendering, and presenting a plurality of different windows at refresh rates required by the windows is described. In this process, a process of performing refreshing, layer composition, drawing, rendering, and presentation may be performed on window data of all the windows at the refresh rates corresponding to the windows, and there is no need to present all windows at a highest refresh rate, thereby lowering power consumption of a system and saving system performance. In addition, in the window display process described above, a process of automatically combining and allocating a plurality of lanes and performing concurrent transmission in the plurality of lanes can be implemented without participation by the user. The plurality of windows are displayed at lower power consumption without perception by the user, thereby simplifying a window display procedure, lowering power consumption of the system, and improving user experience.

With reference to the first aspect, in some implementations of the first aspect, when the bandwidth of the transmission lane in the first lane set is less than a bandwidth at which the window data of the first window is transmitted, and/or the bandwidth of the transmission lane in the second lane set is less than a bandwidth at which the window data of the second window is transmitted, the method further includes: merging the window data of the first window and the window data of the second window, and transmitting merged window data to the display through the plurality of transmission lanes; and drawing and displaying the first window and the second window on the display based on the first refresh rate and the merged window data.

Specifically, when it is determined that lane resources cannot be allocated based on groups to independently transmit window data of different window groups, refresh rates of the plurality of windows may be unified as a high refresh rate, the plurality of windows may be merged into a full-screen picture, and refreshing, layer composition, drawing, rendering, and presentation may be performed on the window data at the high refresh rate.

With reference to the first aspect and the foregoing implementations, in some implementations of the first aspect, when the bandwidth of the transmission lane in the first lane set is less than a bandwidth at which the window data of the first window is transmitted, and a difference between the bandwidth at which the window data of the first window is transmitted and the bandwidth of the transmission lane in the first lane set is less than or equal to a first threshold, the method further includes: zooming out the first window in a preset adjustment range, so that the bandwidth of the transmission lane in the first lane set is greater than or equal to the bandwidth at which the window data of the first window is transmitted; and/or when the bandwidth of the transmission lane in the second lane set is less than a bandwidth at which the window data of the second window is transmitted, and a difference between the bandwidth at which the window data of the second window is transmitted and the bandwidth of the transmission lane in the second lane set is less than or equal to the first threshold, the method further includes: zooming out the second window in the preset adjustment range, so that the bandwidth of the transmission lane in the second lane set is greater than or equal to the bandwidth at which the window data of the second window is transmitted.

In a possible implementation, if a manner of automatically adjusting a size of a window in a preset range and/or adjustment of a lane grouping manner cannot meet requirements for transmitting window data of all grouped windows, that is, bandwidths of some windows cannot meet requirements in any lane allocation manner, a lane resource grouping operation provided in this embodiment of this application is not performed. Instead, according to an existing display process, all of the first window and the second window that are obtained by screen splitting are merged into a full-screen picture, and then window data is uniformly transmitted in a plurality of lane groups.

According to the method, when the lane resources cannot be allocated based on groups to independently transmit window data of different window groups, the system may automatically switch to an implementation process in which after all windows obtained by screen splitting are merged into a full-screen picture, window data of the full-screen picture is uniformly transmitted in a plurality of lane groups, to provide a plurality of possible implementation solutions for the window display process, to adapt to multi-window display requirements in different scenarios. In addition, the switching process requires no participation by the user, and normal display of the plurality of windows is ensured without perception by the user, thereby improving user experience.

In another possible implementation, the system may determine whether refresh rates of a plurality of to-be-displayed windows are the same. When the refresh rates are the same, the system may automatically switch to an implementation process in which after all windows obtained by screen splitting are merged into a full-screen picture, window data of the full-screen picture is uniformly transmitted in a plurality of lane groups, to provide a plurality of possible implementation solutions for the window display process.

With reference to the first aspect and the foregoing implementations, in some implementations of the first aspect, the zooming out the first window or the zooming out the second window includes: automatically zooming out the first window or the second window; or detecting a first operation of a user, and zooming out the first window or the second window in response to the first operation.

According to the method, a size of a window displayed in the split-screen manner can be dynamically and automatically adjusted, or a size of a window displayed in the split-screen manner may be adjusted based on a manual operation of the user. Further, the size of the window is adjusted and limited in a preset range, to meet a requirement for a transmission bandwidth of window data with no impact on visual experience of the user. In this way, according to the method provided in this embodiment of this application, window data with different refresh rates is independently transmitted based on groups, and the system can perform a process of refreshing, layer composition, drawing, rendering, and presentation on the window data at the refresh rates of windows, thereby lowering power consumption of the system and saving system performance.

With reference to the first aspect and the foregoing implementations, in some implementations of the first aspect, the first window and the second window have no overlapping area; or the first window and the second window have an overlapping area.

It should be understood that displaying a plurality of windows herein may include: split-screen display, where the first window and the second window that are displayed in the split-screen manner have no overlapping area; or may further include a PIP overlapped-display scenario, where the first window and the second window that are displayed in PIP have an overlapping area.

With reference to the first aspect and the foregoing implementations, in some implementations of the first aspect, when the first window and the second window have an overlapping area, the method further includes: obtaining information about a display hierarchy of the first window and the second window; and when the second window is displayed at an upper layer of the first window, determining to-be-transmitted data included in an area other than the overlapping area in the first window; and determining the first lane set in the plurality of transmission lanes based on the to-be-transmitted data; or when the first window is displayed at an upper layer of the second window, determining to-be-transmitted data included in an area other than the overlapping area in the second window; and determining the second lane set in the plurality of transmission lanes based on the to-be-transmitted data.

It should be understood that the "display hierarchy" herein may be understood as an overlapped-display sequence of windows seen by the user. For example, if a window of a video application is displayed on a window of a WeChat application, the window of the video application is displayed at an upper layer, and the window of the WeChat application is displayed at a lower layer. In addition, the user may change a display hierarchy of windows by using a click and select operation. Details are not described in this embodiment of this application.

With reference to the first aspect and the foregoing implementations, in some implementations of the first aspect, the first window and the second window are different interfaces of a same application; or the first window and the second window are different interfaces of different applications.

It should be understood that in this embodiment of this application, for a same application, different display interfaces may correspond to a same refresh rate or different refresh rates. For example, any interface of the WeChat application may correspond to a refresh rate of 90 Hz, a main interface of an episode display menu of the video application may correspond to a refresh rate of 30 Hz, and a playback interface of a video clip may correspond to a refresh rate of 60 Hz. Refresh rates of different interfaces of different applications and refresh rates of different interfaces of a same application are not limited in this embodiment of this application.

With reference to the first aspect and the foregoing implementations, in some implementations of the first aspect, a rate at which the window data of the first window is transmitted in the first lane set is different from a rate at which the window data of the second window is transmitted in the second lane set; and/or a compression manner of the window data of the first window is different from a compression manner of the window data of the second window.

In conclusion, when an electronic device displays a plurality of windows, a plurality of different window display schemes are provided for different scenarios in this embodiment of this application. The system may automatically switch between the different window display schemes based on a current scenario, to meet multi-window display requirements in different scenarios.

Specifically, in a first case, when refresh rates corresponding to the plurality of windows are different, the plurality of windows are grouped based on the different refresh rates, and a plurality of lanes included in a lane module are automatically combined and allocated, so that window data of one window group can be transmitted in each lane group, to implement a process of separately refreshing, drawing, rendering, and presenting the plurality of different windows at the refresh rates required by the windows. In this process, all the windows may be presented at the refresh rates corresponding to the windows, and there is no need to present all the windows at a highest refresh rate, thereby lowering power consumption of the system and saving system performance.

In a second case, if the lane resources cannot be allocated based on groups to independently transmit window data of different window groups, or when refresh rates of the plurality of to-be-displayed windows are the same, after all the windows obtained by screen splitting are merged into a full-screen picture, window data of the full-screen picture is uniformly transmitted in a plurality of lane groups. The foregoing solutions provide a plurality of possible implementation solutions for window display processes in different scenarios, and can implement display of a plurality of windows at lower power consumption without participation by the user or perception by the user, thereby simplifying a window display procedure, lowering power consumption of the system, and improving user experience.

A second aspect provides an electronic device, including: a display; one or more processors; one or more memories; and a module on which a plurality of applications are installed. The memory stores one or more programs, the one or more programs include instructions, and when the instructions are executed by the electronic device, the electronic device is enabled to perform the following steps: displaying a plurality of windows on the display, where the plurality of windows include a first window and a second window, and a first refresh rate corresponding to the first window is greater than a second refresh rate corresponding to the second window; obtaining to-be-transmitted window data of the first window and to-be-transmitted window data of the second window; determining a first lane set in a plurality of transmission lanes based on the to-be-transmitted window data of the first window and determining a second lane set in the plurality of transmission lanes based on the to-be-transmitted window data of the second window, where the first lane set and the second lane set include different transmission lanes; when a bandwidth of a transmission lane in the first lane set meets a transmission requirement of the window data of the first window, and a bandwidth of a transmission lane in the second lane set meets a transmission requirement of the window data of the second window, transmitting the window data of the first window to the display through the first lane set, and transmitting the window data of the second window to the display through the second lane set; and drawing and displaying the first window on the display based on the first refresh rate and drawing and displaying the second window on the display based on the second refresh rate.

With reference to the second aspect, in some implementations of the second aspect, when the bandwidth of the transmission lane in the first lane set is less than a bandwidth at which the window data of the first window is transmitted, and/or the bandwidth of the transmission lane in the second lane set is less than a bandwidth at which the window data of the second window is transmitted, the electronic device is further configured to perform the following steps: merging the window data of the first window and the window data of the second window, and transmitting merged window data to the display through the plurality of transmission lanes; and drawing and displaying the first window and the second window on the display based on the first refresh rate and the merged window data.

With reference to the second aspect and the foregoing implementations, in some implementations of the second aspect, when the bandwidth of the transmission lane in the first lane set is less than a bandwidth at which the window data of the first window is transmitted, and a difference between the bandwidth at which the window data of the first window is transmitted and the bandwidth of the transmission lane in the first lane set is less than or equal to a first threshold, the electronic device is further configured to perform the following step: zooming out the first window in a preset adjustment range, so that the bandwidth of the transmission lane in the first lane set is greater than or equal to the bandwidth at which the window data of the first window is transmitted; and/or when the bandwidth of the transmission lane in the second lane set is less than a bandwidth at which the window data of the second window is transmitted, and a difference between the bandwidth at which the window data of the second window is transmitted and the bandwidth of the transmission lane in the second lane set is less than or equal to the first threshold, the electronic device is further configured to perform the following step: zooming out the second window in the preset adjustment range, so that the bandwidth of the transmission lane in the second lane set is greater than or equal to the bandwidth at which the window data of the second window is transmitted.

With reference to the second aspect and the foregoing implementations, in some implementations of the second aspect, the electronic device is further configured to perform the following step: automatically zooming out the first window or the second window; or detecting a first operation of a user, and zooming out the first window or the second window in response to the first operation.

With reference to the second aspect and the foregoing implementations, in some implementations of the second aspect, the first window and the second window have no overlapping area; or the first window and the second window have an overlapping area.

With reference to the second aspect and the foregoing implementations, in some implementations of the second aspect, when the first window and the second window have an overlapping area, the electronic device is further configured to perform the following steps: obtaining information about a display hierarchy of the first window and the second window; and when the second window is displayed at an upper layer of the first window, determining to-be-transmitted data included in an area other than the overlapping area in the first window; and determining the first lane set in the plurality of transmission lanes based on the to-be-transmitted data; or when the first window is displayed at an upper layer of the second window, determining to-be-transmitted data included in an area other than the overlapping area in the second window; and determining the second lane set in the plurality of transmission lanes based on the to-be-transmitted data.

With reference to the second aspect and the foregoing implementations, in some implementations of the second aspect, the first window and the second window are different interfaces of a same application; or the first window and the second window are different interfaces of different applications.

With reference to the second aspect and the foregoing implementations, in some implementations of the second aspect, a rate at which the window data of the first window is transmitted in the first lane set is different from a rate at which the window data of the second window is transmitted in the second lane set; and/or a compression manner of the window data of the first window is different from a compression manner of the window data of the second window.

A third aspect provides a graphical user interface on an electronic device. The electronic device has a display, a memory, and one or more processors. The one or more processors are configured to execute one or more computer programs stored in the memory. The graphical user interface includes a graphical user interface displayed when the electronic device performs the method for displaying a plurality of windows in any one of the possible implementations of the foregoing aspects.

A fourth aspect provides an apparatus. The apparatus is included in an electronic device. The apparatus has a function of implementing behavior of the electronic device in the first aspect and the possible implementations of the first aspect. The function may be implemented by hardware, or may be implemented by hardware executing corresponding software. The hardware or the software includes one or more modules or units corresponding to the foregoing function, such as a display module or unit, a detection module or unit, and a processing module or unit.

A fifth aspect provides a computer storage medium, including computer instructions. When the computer instructions are run on an electronic device, the electronic device is enabled to perform the method for displaying a plurality of windows in any one of the possible implementations of the first aspect.

A sixth aspect provides a computer program product. When the computer program product is run on an electronic device, the electronic device is enabled to perform the method for displaying a plurality of windows in any one of the first aspect or the possible implementations of the first aspect.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3(a) to FIG. 3(c) are a schematic diagram of a graphical user interface in a split-screen display process of a mobile phone according to an embodiment of this application;
FIG. 4(a) to FIG. 4(c) are a schematic diagram of data transmission in a window display process according to an embodiment of this application;
FIG. 5(a) to FIG. 5(c)(2) are a schematic diagram of a window display process according to an embodiment of this application;
FIG. 6 is a schematic flowchart of a window display process according to an embodiment of this application;
FIG. 7(a) to FIG. 7(c)(2) are a schematic diagram of another window display process according to an embodiment of this application;
FIG. 8(a) to FIG. 8(c)(2) are a schematic diagram of another window display process according to an embodiment of this application; and
FIG. 9 is a schematic flowchart of another window display process according to an embodiment of this application.

### DESCRIPTION OF EMBODIMENTS

The following describes technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The term "first" or "second" mentioned below is merely intended for a purpose of description, and shall not be understood as an indication or implication of relative importance or implicit indication of the number of indicated technical features. Therefore, a feature limited by "first" or "second" may explicitly indicate or implicitly include one or more such features. For example, "a first group" and "a second group" are used in the embodiments of this application to represent different window groups or represent different transmission lane groups.

A method for displaying a plurality of windows provided in an embodiment of this application may be applied to an electronic device such as a mobile phone, a tablet computer, a wearable device, a vehicle-mounted device, an augmented reality (augmented reality, AR)/virtual reality (virtual reality, VR) device, a laptop computer, an ultra-mobile personal computer (ultra-mobile personal computer, UMPC), a netbook, and a personal digital assistant (personal digital assistant, PDA). A specific type of the electronic device is not limited in this embodiment of this application.

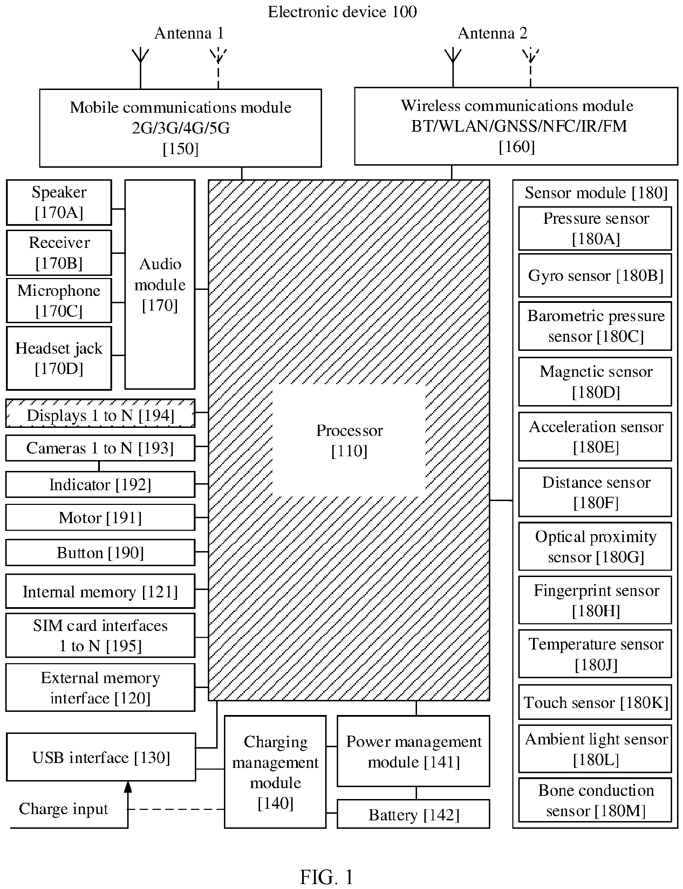

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). The I2S interface may be used for audio communication. The PCM interface may also be used for audio communication, and analog signal sampling, quantization, and coding. The UART interface is a universal serial data bus, and is used for asynchronous communication. The bus may be a two-way communication bus. The bus converts to-be-transmitted data between serial communication and parallel communication.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

In this embodiment of this application, the MIPI interface may be configured to transmit display data of an interface, such as window data, to a display module. The display module displays different windows based on the transmitted window data. Detailed descriptions are provided in subsequent embodiments, and details are not provided herein.

It can be understood that an interface connection relationship between the modules that is shown in this embodiment of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from a charger. The power management module 141 is configured to connect the battery 142, the charging management module 140, and the processor 110. A wireless communication function of the electronic device 100 may be implemented by using the antenna 1, the antenna 2, the mobile communications module 150, the wireless communications module 160, the modem processor, the baseband processor, and the like. The mobile communications module 150 may provide a solution applied to the electronic device 100 and including wireless communication such as 2G/3G/4G/5G. The wireless communications module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like.

The electronic device 100 may implement a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be used to connect to an external storage card, for example, a micro-SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 implements various function applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (such as audio data and an address book) and the like that are created during use of the electronic device 100. In addition, the internal memory 121 may include a high-speed random access memory, and may further include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an electrical audio signal into a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending speech information, a user may place the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, identify a sound source, and implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. The gyro sensor 180B may be configured to determine a motion posture of the electronic device 100. The barometric pressure sensor 180C is configured to measure barometric pressure. In some embodiments, the electronic device 100 calculates an altitude based on a value of the barometric pressure measured by the barometric pressure sensor 180C, to assist in positioning and navigation. The magnetic sensor 180D includes a Hall sensor. The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between landscape mode and portrait mode or a pedometer. The distance sensor 180F is configured to measure a distance. The electronic device 100 may measure a distance in an infrared manner or a laser manner. The optical proximity sensor 180G may include a light-emitting diode (LED) and an optical detector, for example, a photodiode. The light-emitting diode may be an infrared light-emitting diode. The ambient light sensor 180L is configured to sense ambient light brightness. The electronic device 100 may adaptively adjust brightness of the display 194 based on the sensed ambient light brightness. The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. The temperature sensor 180J is configured to detect a temperature. In some embodiments, the electronic device 100 executes a temperature processing policy based on the temperature detected by the temperature sensor 180J. The touch sensor 180K is also referred to as a "touch panel". The touch sensor 180K may be disposed on the display 194, and the touch sensor 180K and the display 194 form a touchscreen. The bone conduction sensor 180M may obtain a vibration signal. The button 190 includes a power button, a volume button, and the like. The button 190 may be a mechanical button. The button 190 may be a touch button. The electronic device 100 may receive a key input, and generate a key signal input related to user settings and function control of the electronic device 100. The motor 191 may generate a vibration prompt. The motor 191 may be configured to produce an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card.

A possible hardware structure of the electronic device 100 is described above. It can be understood that the structure shown in this embodiment of this application does not impose a specific limitation on the electronic device 100. In some other embodiments of this application, the electronic device 100 may include more or fewer components than those shown in the figure, combine some components, split some components, or have different component arrangements. The components shown in the figure may be implemented by using hardware, software, or a combination of software and hardware.

A software system of the electronic device 100 may use a layered architecture, an event-driven architecture, a microkernel architecture, a micro service architecture, or a cloud architecture. In this embodiment of this application, an Android system of a layered architecture is used as an example to illustrate the software structure of the electronic device 100.

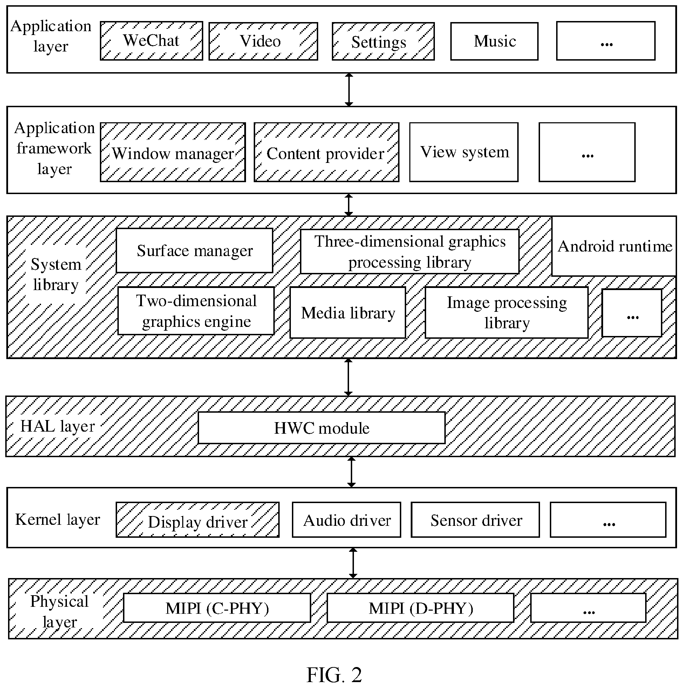

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, an Android system is divided into four layers, which are respectively an application layer, an application framework layer, Android runtime (Android runtime) and system libraries, a hardware abstraction layer (hardware abstraction layer, HAL), a kernel layer, a physical layer, and the like from top to bottom.

The application layer may include a series of application packages. As shown in FIG. 2, the application packages may include applications such as WeChat, videos, settings, and music, and are not listed one by one in this embodiment of this application.

The application framework layer provides an application programming interface (application programming interface, API) and a programming framework for an application at the application layer. The application framework layer includes some predefined functions.

As shown in FIG. 2, the application framework layer may include a window manager, a content provider, a view system, and the like. The window manager is configured to manage a window program. The window manager may obtain a size of a display, determine whether a status bar is displayed on a screen of the current display, and perform operations such as locking the screen and capturing the screen. The content provider is configured to store and obtain data, and enable the data to be accessed by an application. The data may include video data, image data, audio data, phone book data, and the like. The view system includes visual controls, such as a control for displaying a text and a control for displaying an image. The view system may be configured to construct an application. A display interface may include one or more views. For example, the display interface may include an application icon, a text display view, a picture display view, and the like.

The Android runtime includes a kernel library and a virtual machine. The Android runtime is responsible for scheduling and management of the Android system. The kernel library includes two parts: a function that needs to be called in Java language, and a kernel library of Android.

The application layer and the application framework layer run on a virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, such as a surface manager (a surface manager or a surface flinger), a media library (media libraries), a three-dimensional graphics processing library (such as OpenGL ES), a two-dimensional graphics engine (such as SGL), a media library, and an image processing library.

The surface manager is configured to manage a display subsystem and provide fusion of a two-dimensional layer and a three-dimensional layer for a plurality of applications. The media library supports playing and recording of a plurality of commonly used audio and video formats, static image files, and the like. The media library can support a plurality of audio and video coded formats, such as: MPEG-4, H.264, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing. The image processing library may provide analysis of various image data, a plurality of image processing algorithms, and the like, for example, may provide processing such as image cutting, image fusion, image blurring, and image sharpening. Details are not described herein.

The HAL layer is an interface layer located above a kernel layer of an operating system and a hardware circuit and is intended to abstract hardware. The HAL layer may include a hardware composer (hardware composer, HWC) and the like, and the HWC may complete a process of combining and displaying image data by using hardware, to provide service support for an upper layer.

In the window display process of the display described in this embodiment of this application, the HWC may cooperate with a plurality of modules of a plurality of layers, such as the window manager of the application layer, and the surface manager, the three-dimensional graphics processing library, and the two-dimensional graphics engine of the system library, to complete the process of combining and displaying image data.

The kernel layer is a layer between hardware and software. The kernel layer includes at least a display driver, a camera driver, an audio driver, and a sensor driver.

A physical layer (physic, PHY) may be included below the kernel layer. The physical layer may provide a transmission medium and an interconnection lane for data communication inside a device or between devices, and provide a reliable environment for data transmission. The physical layer may be understood as a transport layer that provides "a signal and a medium".

For example, in the window display process of the display described in this embodiment of this application, refreshing of window data may be transmitted according to a mobile industry processor interface (Mobile Industry Processor Interface, MIPI) protocol, and the MIPI protocol specifies transmission specifications for a plurality of types of window data. For example, the MIPI protocol defines specifications related to a high-speed serial interface (Display Serial Interface) between a processor and a display module, a transmission physical medium C-PHY, D-PHY, and the like of a mobile application, an input/output circuit, a clock signal mechanism, a lane (Lane) for sending and collecting data, frame multiplexing, and frame parsing. The D-PHY is configured with a plurality of data lanes (Lane), and the lanes are used to transmit window data. In this embodiment of this application, the plurality of data lanes may be referred to as a "lane module". The specifications of the MIPI protocol are not described in this embodiment of this application.

Specifically, with reference to the window display process of the display described in this embodiment of this application, the surface manager may obtain data from different applications at the application layer. The data may include a plurality of different types of data used to display window content, such as image data and window location coordinate data. The data is collectively referred to as "window data" in this embodiment of this application. The surface manager may further provide a layer (layer) composition service, and the three-dimensional graphics processing library, the two-dimensional graphics engine, and the like may draw and render a composed layer and send the composed layer to the display for display after rendering. For each application window displayed on the display, a process of data refreshing, layer composition, drawing, rendering, and presentation may be performed on display content of the application window. In addition, when data refreshing is performed on the display content of the application window, data refreshing may be performed at a corresponding refresh rate, to keep the display content of the window updated in real time.

The process of data refreshing, layer composition, rendering, and presentation described above may be completed by the HWC by controlling cooperative participation by a software module and hardware. In subsequent descriptions, the process is uniformly described as being executed by the HWC. It should be understood that the process may be executed by the HWC by controlling cooperation of one or more modules of a plurality of layers such as the surface manager, the three-dimensional graphics processing library, the two-dimensional graphics engine, and the physical layer. Details are not described herein.

For ease of understanding, the following embodiments of this application specifically describe, with reference to the accompanying drawings and application scenarios, the method for displaying a plurality of windows provided in this embodiment of this application by using a mobile phone having the structures shown in FIG. 1 and FIG. 2 as an example.

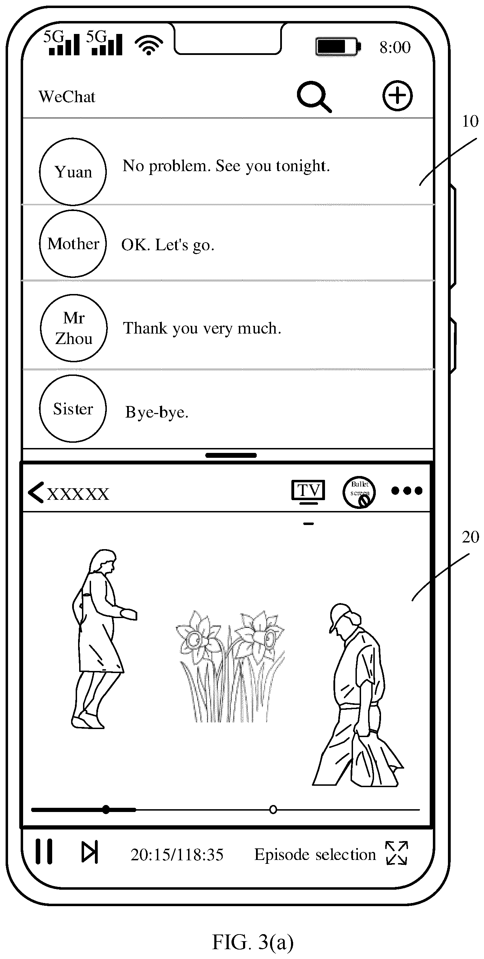

FIG. 3(a) to FIG. 3(c) are a schematic diagram of a graphical user interface (graphical user interface, GUI) in a split-screen display process of a mobile phone according to an embodiment of this application. As shown in FIG. 3 (a), a currently output interface is displayed on a display of the mobile phone, and the interface includes a WeChat application window 10 and a video application window 20. Specifically, the WeChat application window 10 is configured to display an interface of a WeChat application, and the interface is not limited to a main interface of the WeChat application, a chat interface with a friend, or the like. The video application window 20 is configured to display an interface of a video application, and the interface is not limited to a main interface of the video application, a playback interface of a video clip, or the like.

When a plurality of windows (or referred to as "sub-windows") are displayed on the display of the mobile phone, different windows may correspond to different refresh rates. For example, using FIG. 3 (a) as an example, when the WeChat application window 10 displays the main interface of the WeChat application, a refresh rate of window content may be 90 Hz. When the video application window 20 displays the playback interface of a video clip, a refresh rate of window content may be 60 Hz. The WeChat application window 10 corresponds to a higher refresh rate, and this can ensure that window data related to the WeChat application is updated in a timely manner, and a message related to the WeChat application is displayed in real time. In this embodiment of this application, a refresh rate of window content may be understood as a frame rate at which an application of an upper application draws and renders a layer, for example, a quantity of frames of display pictures that are drawn and rendered within 1000 milliseconds. Details are not described in the following.

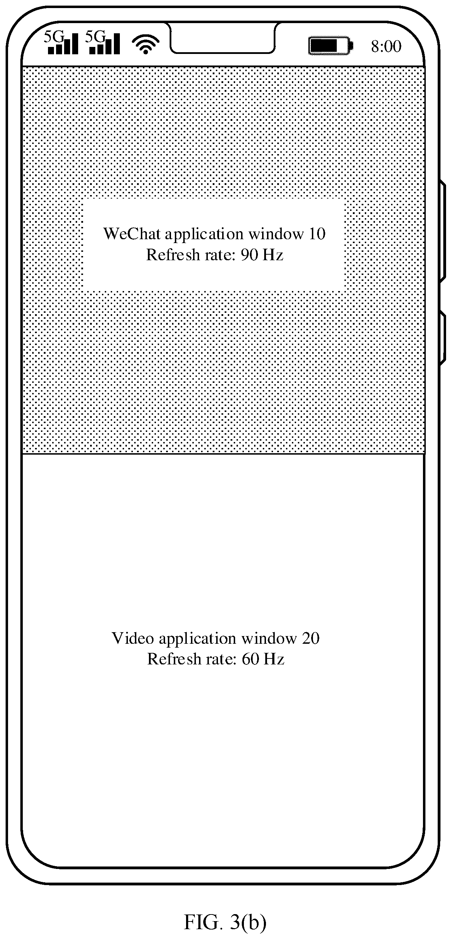

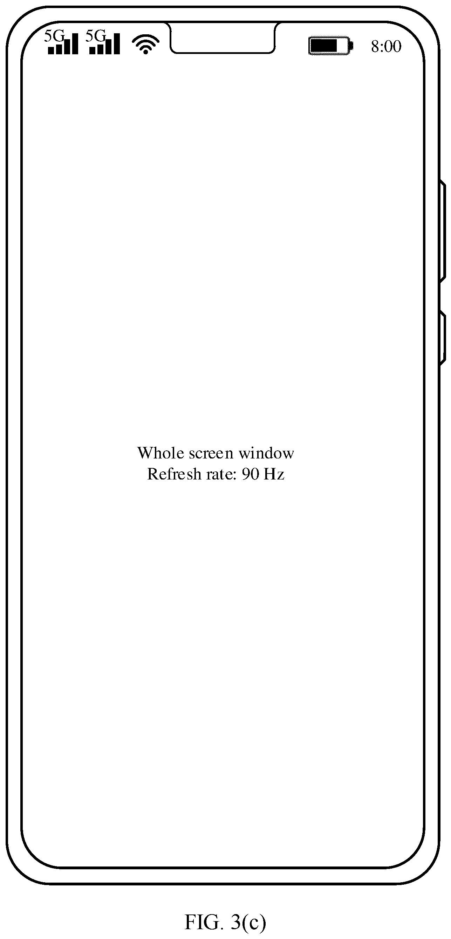

It should be understood that in this embodiment of this application, for a same application, different display interfaces may correspond to a same refresh rate or different refresh rates. For example, any interface of the WeChat application may correspond to a refresh rate of 90 Hz, a main interface of an episode display menu of the video application may correspond to a refresh rate of 30 Hz, and a playback interface of a video clip may correspond to a refresh rate of 60 Hz. In a subsequent embodiment, as shown in (b) in FIG. 3, descriptions are provided by using an example in which the WeChat application window 10 corresponds to a refresh rate of 90 Hz, and the video application window 20 corresponds to a refresh rate of 60 Hz when displaying a playback interface of a video clip. Refresh rates of different interfaces of different applications and refresh rates of different interfaces of a same application are not limited in this application.

It should be further understood that, in this embodiment of this application, display of windows of different applications on the display of the mobile phone is mainly described. A display area of the display of the mobile phone further includes a status bar at the top, a navigation bar at the bottom, and the like. For example, as shown in schematic diagrams shown in FIG. 3 (a) to FIG. 3(c), the status bar may display an operator icon, a wireless network icon, battery capacity information, time information, and the like. The status bar may be independently displayed, or may be displayed in combination with the WeChat application window 10 or the video application window 20. A display process of an area outside an application window is not limited in this embodiment of this application.

If different windows correspond to different refresh rates, in an existing process of displaying a plurality of windows, in a layer composition phase, the HWC may merge layers of a plurality of windows into a full-screen picture for rendering and presentation. Therefore, in a window data refreshing process, when the plurality of windows have different refresh rates, the system may work in a high refresh rate mode. For example, as shown in FIG. 3(c), the refresh rates of the WeChat application window 10 and the video application window 20 are unified as a high refresh rate of 90 Hz, to perform the process of refreshing, layer composition, drawing, rendering, and presentation on window data.

As described in FIG. 2, the D-PHY is configured with a plurality of data lanes (Lane), and the lanes are used to transmit window data. The plurality of data lanes may be referred to as a "lane module". The following briefly describes the lane module of the D-PHY. The lane module has a plurality of lanes, and specific parameter features may include the following.
(1) The lanes have different refresh rates, or a plurality of lanes have a same refresh rate. For example, it is assumed that the lane module has four lanes, which are respectively denoted as a lane 0, a lane 1, a lane 2, and a lane 3. The lane 0, the lane 1, the lane 2, and the lane 3 may support one or more refresh rates. For example, a maximum refresh rate supported by the lane 0, the lane 1, the lane 2, and the lane 3 is 180 Hz. Therefore, with reference to transmission requirements in different scenarios, the lane 0, the lane 1, the lane 2, and the lane 3 may support any refresh rate less than or equal to 180 Hz.
(2) The lanes have different MIPI transmission rates, or a plurality of lanes have a same MIPI transmission rate. The MIPI transmission rate may be understood as a working rate of a lane. A maximum MIPI transmission rate of each lane is a bandwidth of the lane.
   For example, the maximum MIPI transmission rate supported by the lane 0, the lane 1, the lane 2, and the lane 3 is 30 bytes per millisecond. Therefore, based on working modes or transmission requirements in different scenarios, the lane 0, the lane 1, the lane 2, and the lane 3 may support a transmission rate less than or equal to 30 bytes per millisecond. It should be understood that if each lane is in a working mode with a highest rate, a corresponding maximum MIPI transmission rate (that is, a bandwidth) may also be determined.
(3) The lanes have different display stream compression (display stream compression, DSC) rates, or a plurality of lanes have a same DSC compression rate. For example, based on working modes or transmission requirements in different scenarios, the lane 0, the lane 1, the lane 2, and the lane 3 may support a transmission rate less than or equal to 30 bytes per millisecond.

It should be understood that parameters of the lane module described above such as a refresh rate, an MIPI transmission rate, and a DSC rate may be separately set for each different lane. For example, refresh rates, MIPI transmission rates, and DSC rates of the lane 0 and the lane 1 are separately set to be the same or different. This is not limited in this embodiment of this application.

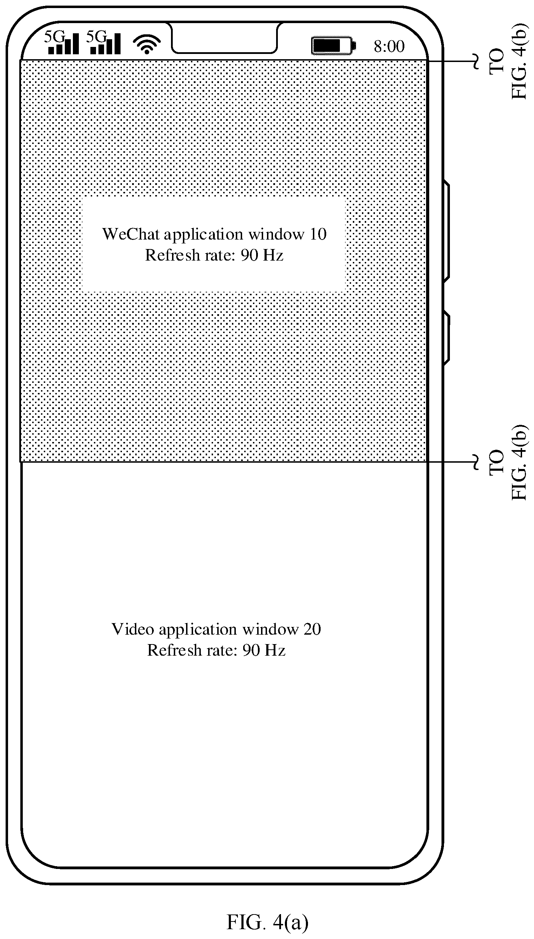

Based on the transmission process of window data described above, with reference to the WeChat application window 10 and the video application window 20 shown in FIG. 3 (a) to FIG. 3(c), in an example in which the display of the mobile phone is a video screen with a resolution of 2400* 1080, a transmission process of window data of a D-PHY based on four lanes may be shown in FIG. 4(a) to FIG. 4(c).

FIG. 4(a) to FIG. 4(c) are a schematic diagram of data transmission in a window display process according to an embodiment of this application. As shown in FIG. 4(a), a WeChat application window 10 and a video application window 20 are displayed on a display of a mobile phone, and refresh rates of the WeChat application window 10 and the video application window 20 are unified as a high refresh rate of 90 Hz. An HWC merges layers of the WeChat application window 10 and the video application window 20 into a full-screen picture based on the refresh rate of 90 Hz. Specifically, in the transmission process of window data, areas of the two windows may be segmented based on grids. It should be understood that an area segmentation process may be performed based on a quantity of slices (slices) of a display driver integrated circuit (display driver integrated circuit, DDIC) and a supported area size range.

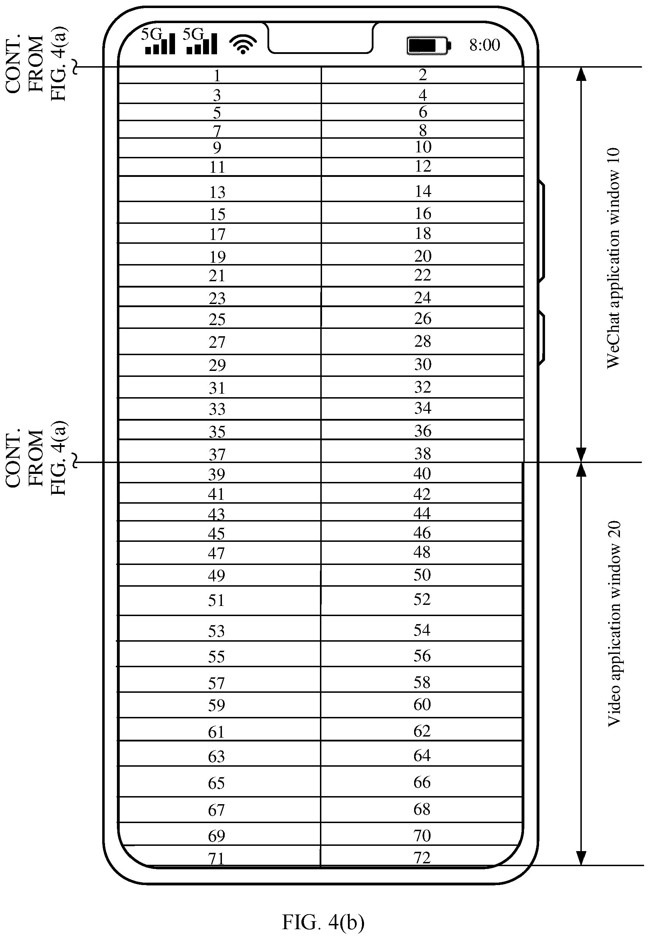

For example, it is assumed that display stream compression (display stream compression, DSC) is a dual slice (dual slice) technology. For a display in a video mode (video mode) of 2400* 1080 (unit: pixel), the full-screen picture is segmented based on an area with a size of 60*540, and area segmentation is performed on the WeChat application window 10 and the video application window 20. Areas obtained after segmentation may be shown in FIG. 4(b). After area segmentation is performed on the WeChat application window 10 and the video application window 20, the WeChat application window 10 includes an area 1 to an area 38, and the video application window 20 includes an area 39 to an area 72.

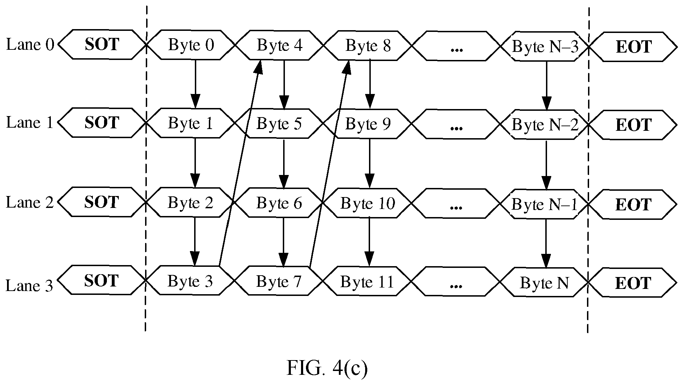

After window data of each area is compressed, a window data packet obtained after compression is transmitted in a lane 0 to a lane 4 shown in FIG. 4(c). Each lane includes a start symbol (start of transmission, SOT) and an end symbol (end of transmission, EOT). It should be understood that, an existing transmission window data packet is cooperatively and concurrently transmitted in a plurality of lanes. Each window data packet is concurrently and cooperatively transmitted in four lane groups in sequence based on a quantity of bytes. As shown in FIG. 4(c), a part of a window data packet in the area 1 is first carried by using a byte 0 of the lane 0, and then, based on a direction indicated by an arrow, remaining parts are sequentially carried by using a byte 1 of the lane 1, a byte 2 of the lane 2, a byte 3 of the lane 3, a byte 4 of the lane 0, and the like, until all bytes included in the window data packet of the area 1 are transmitted. Similarly, all window data packets of the area 1 to the area 38 included in the WeChat application window 10 and the area 39 to the area 72 included in the video application window 20 are transmitted.

It should be understood that window data corresponding to each area may be compressed. After compression, full-screen content may be transmitted to the display based on a specific image sequence by using the lane module for display. Optionally, for example, window data from the area 1 in an upper left corner of the display is used as start to-be-displayed window data, and transmission is performed from left to right and from top to bottom in a sequence of the area 2, the area 3, the area 4, ..., and the area 72. This is not limited in this embodiment of this application.

It should be further understood that a window data compression process (DSC technology) may be performed with reference to specifications of the Video Electronics Standards Association (Video Electronics Standards Association, VESA). This is not limited in this embodiment of this application.

After a window data packet is transmitted to a DDIC side, all received window data packets are combined and restored in sequence. After restoration, image information is restored by using DSC decoding, and finally, the restored image information is updated to the display. For example, display image content is refreshed and displayed by using a panel liquid crystal of the display or a light emitting diode of an OLED.

In the foregoing implementation process, if all windows on the display correspond to different refresh rates, window data of a picture obtained after overall merging is refreshed and synchronized at a highest refresh rate in refresh rates corresponding to all the windows. For those windows with low refresh rates, if a process of refreshing and synchronizing window data at a high refresh rate is used, only some frames of displayed content are repeatedly refreshed. This process increases load and power consumption of a system, and affects system performance. Particularly, in a scenario of playing a video or demonstrating a dynamic effect of a game, a low refresh rate can already meet a current display requirement. If window data is refreshed and synchronized at a high refresh rate, a same display picture is continuously repeatedly refreshed. Consequently, this increases the load and power consumption of the system, causes frame freezing, heating, and the like of the electronic device, and affects user experience.

Therefore, an embodiment of this application provides a method for displaying a plurality of windows, to meet a multi-window display requirement and reduce system load and power consumption of an electronic device.

The following describes window display processes provided in embodiments of this application for different scenarios by using display processes of a WeChat application window 10 and a video application window 20 as an example.

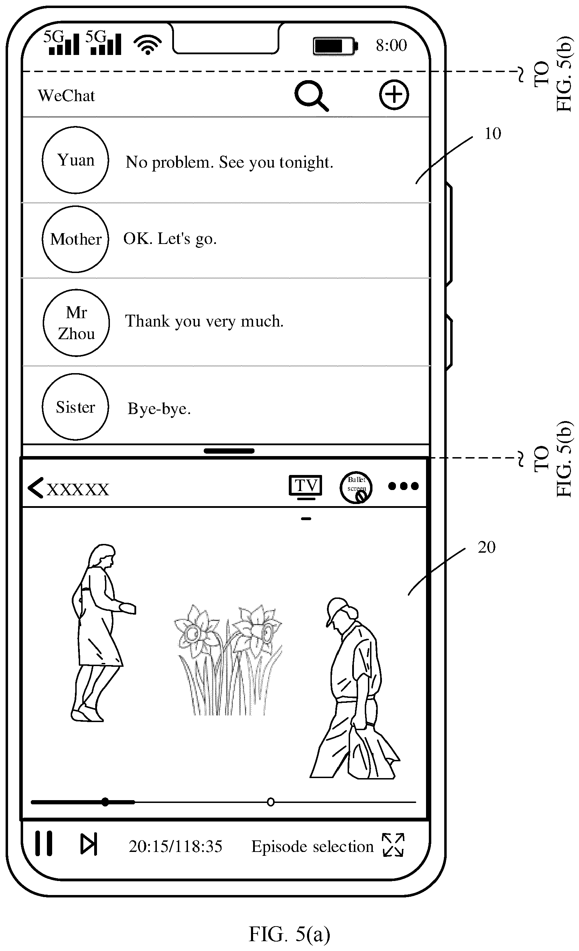

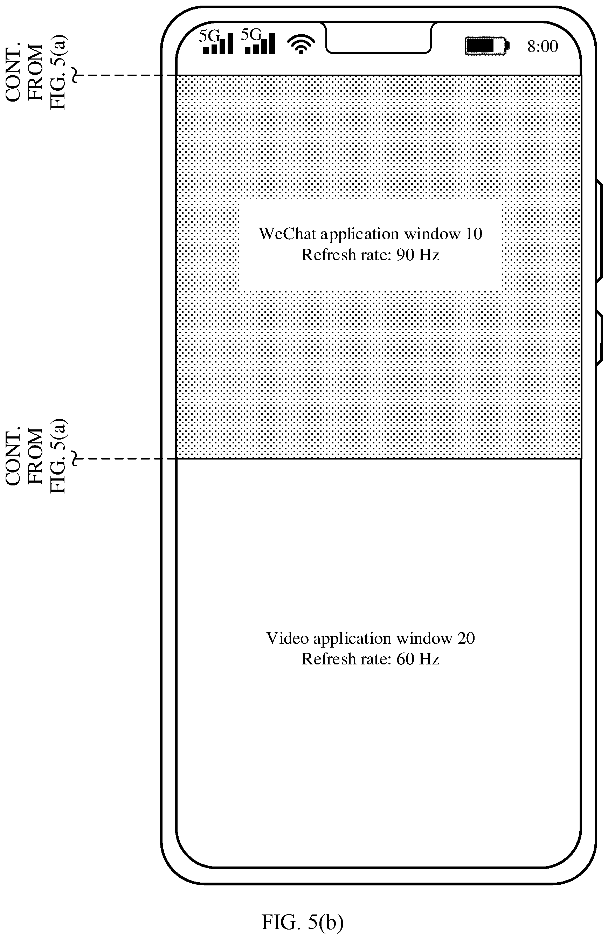

FIG. 5(a) to FIG. 5(c)(2) are a schematic diagram of a window display process according to an embodiment of this application. As shown in FIG. 5(a), a WeChat application window 10 and a video application window 20 are displayed on a display of a mobile phone. In this embodiment of this application, as shown in FIG. 5(b), the WeChat application window 10 corresponds to a refresh rate of 90 Hz, and the video application window 20 corresponds to a refresh rate of 60 Hz. A difference from the window display process described in FIG. 4(a) to FIG. 4(c) lies in that refresh rates of the WeChat application window 10 and the video application window 20 in this embodiment of this application do not need to be unified as a high refresh rate of 90 Hz, and as a result, layers do not need to be merged into a full-screen picture for display. In this process, a process of refreshing, drawing, rendering, and presentation may be performed on window data based on the different refresh rates respectively corresponding to the two windows.

Specifically, in a process of transmitting window data, a plurality of lanes of a lane module are grouped and are respectively configured to transmit window data included in different windows. In other words, the plurality of lanes of the lane module are grouped, to independently transmit window data included in the WeChat application window 10 in one lane group, and independently transmit window data included in the video application window 20 in another lane group.

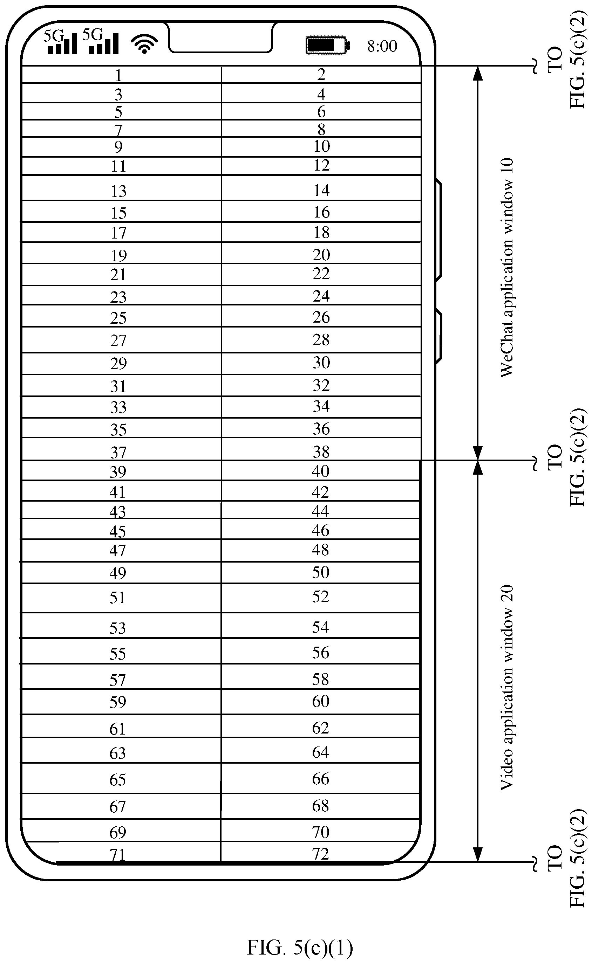

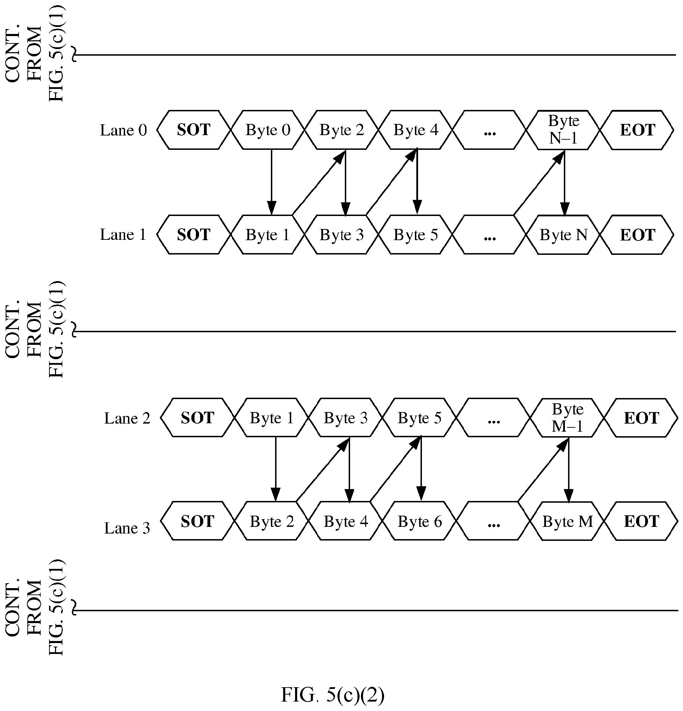

For example, as shown in FIG. 5(c)(1) and FIG. 5(c)(2), a lane 0, a lane 1, a lane 2, and a lane 3 are divided into two groups. The lane 0 and the lane 1 form a first lane group to transmit the window data of the WeChat application window 10. The lane 2 and the lane 3 form a second lane group to transmit the window data of the video application window 20. Each window may be segmented based on the area segmentation manner described in FIG. 4(a) to FIG. 4(c). For example, segmentation is performed based on an area with a size of 60*540. In this case, the lane 0 and the lane 1 are configured to transmit window data of an area 1 to an area 38, and the lane 2 and the lane 3 are configured to transmit window data of an area 39 to an area 72.

In a possible implementation, the plurality of lanes of the lane module may be grouped in a plurality of manners. For example, the plurality of lanes may be grouped based on a quantity of windows currently displayed on the display and a transmission bandwidth required by window data included in each window. It should be understood that a result of lane grouping needs to enable a transmission bandwidth of a lane group to meet a transmission requirement of current window data.

For example, with reference to FIG. 5(c)(1) and FIG. 5(c)(2), when the lane 0 and the lane 1 are used as a first lane group, all window data in the area 1 to the area 38 of the WeChat application window 10 can be transmitted at bandwidths of the lane 0 and the lane 1, the lane 2 and the lane 3 are used as a second lane group, and all window data in the area 39 to the area 72 of the video application window 20 can be transmitted at bandwidths of the lane 2 and the lane 3, the window data of the WeChat application window 10 and the video application window 20 may be currently transmitted based on this grouping manner.

In a possible case, when not all window data in the area 1 to the area 38 of the WeChat application window 10 can be transmitted at the bandwidths of the lane 0 and the lane 1, the lane 0, the lane 1, and the lane 2 may be used as a first lane group, to transmit all the window data in the area 1 to the area 38 of the WeChat application window 10. If all the window data in the area 1 to the area 38 of the WeChat application window 10 can be transmitted in the lane 0, the lane 1 and the lane 2, and all the window data in the area 39 to the area 72 of the video application window 20 can be transmitted at the bandwidth of the lane 3, the window data may be currently transmitted in a manner in which the lane 0, the lane 1, and the lane 2 are used as the first lane group, and the lane 3 is used as a second lane group.

In another possible case, when the lane 0, the lane 1, and the lane 2 are used as a first lane group, and not all window data in the area 1 to the area 38 of the WeChat application window 10 can be transmitted in the first lane group, if only four lanes are currently available, layers of the WeChat application window 10 and the video application window 20 may be merged into a full-screen picture based on the refresh rate of 90 Hz according to the method described in FIG. 4(a) to FIG. 4(c), and then window data of each area of the full-screen picture is compressed and then transmitted in the lane 0 to the lane 4 shown in FIG. 4(c), to meet a current multi-window display requirement.

In another possible implementation, there may be a plurality of area segmentation manners for each application window. For example, area segmentation may be performed based on a quantity of lanes allocated in a current window and a transmission bandwidth requirement. This is not limited in this embodiment of this application.

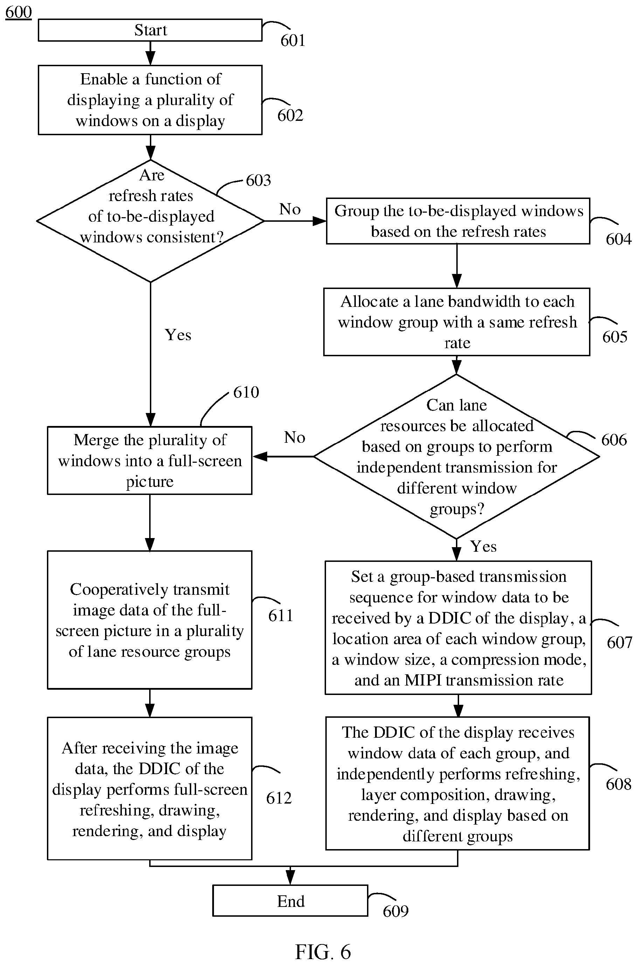

FIG. 6 is a schematic flowchart of a window display process according to an embodiment of this application. Based on the window display process described in FIG. 5(a) to FIG. 5(c)(2), the following describes a specific implementation process with reference to FIG. 6. It should be understood that the method may be implemented in an electronic device (such as a mobile phone or a tablet computer) having the hardware structure with a touchscreen shown in FIG. 1 and the software architecture shown in FIG. 2. As shown in FIG. 6, the method 600 may be cooperatively performed by a plurality of software and hardware modules such as the HWC, the window manager, the three-dimensional graphics processing library, and the display module under control by the processor of the mobile phone. The method 600 includes the following steps.

601: Start.

602: Enable a function of displaying a plurality of windows on a display.

It should be understood that displaying a plurality of windows herein may be split-screen display or may be picture-in-picture (picture-in-picture, PIP) display with overlapped windows. In the scenarios in FIG. 5(a) to FIG. 6, the window display processes are described by using split-screen display as an example. A PIP scenario with overlapped windows is described in subsequent embodiments.

Optionally, in step 602, a user may enable a screen splitting function of the mobile phone by using a specific operation. For example, the user enables the screen splitting function of the mobile phone in settings, or the user enables the screen splitting function of the mobile phone by using a shortcut gesture. This is not limited in this embodiment of this application.

603: Determine whether refresh rates of to-be-displayed windows are consistent.

604: When the refresh rates of the to-be-displayed windows are different, group the to-be-displayed windows based on the refresh rates.

For example, for the WeChat application window 10 and the video application window 20 displayed in FIG. 5(a) to FIG. 5(c)(2), the WeChat application window 10 corresponds to the refresh rate of 90 Hz, and the video application window 20 corresponds to the refresh rate of 60 Hz. The two windows correspond to different refresh rates. The WeChat application window 10 may be denoted as a first window group, and the video application window 20 may be denoted as a second window group.

In a possible implementation, a quantity of windows displayed in a split-screen manner by the mobile phone may be greater than or equal to 3. An example in which three windows are displayed in the split-screen manner, and the three windows have no overlapping part is used. If two windows correspond to a refresh rate of 90 Hz, and one window corresponds to a refresh rate of 60 Hz, the two windows with the refresh rate of 90 Hz may be merged into one group and denoted as a first window group, and the window with the refresh rate of 60 Hz is another group and is denoted as a second window group.

It should be understood that this embodiment of this application may further include more windows displayed in the split-screen manner or more window groups. Details are not described herein.

605: Allocate a lane resource to each window group, to balance a quantity of lanes and a bandwidth of each group.

606: Determine whether lane resources can be allocated based on groups to independently transmit window data of different window groups.

Balancing the quantity of lanes and the bandwidth of each group in step 605 aims at ensuring that each lane group can meet a transmission requirement, such as a transmission bandwidth and a transmission rate, of all window data of a window group. Specifically, when receiving an instruction for displaying a plurality of windows, the mobile phone may identify locations of the windows displayed in the split-screen manner, calculate a total quantity of the windows currently displayed in the split-screen manner, and calculate a size of each application window, a refresh rate of each application window, a required MIPI transmission rate, a quantity of lanes, and the like. Further, a plurality of lanes of a lane module are grouped into, for example, a first lane group and a second lane group for the first window group and the second window group. In addition, it is determined whether all window data of the first window group in the current windows displayed in the split-screen manner can be transmitted through the first lane group, and whether all window data of the second window group in the current windows displayed in the split-screen manner can be transmitted through the second lane group.

For example, as shown in FIG. 5(c)(1) and FIG. 5(c)(2), an example in which the lane module includes four lanes is used. A lane 0 and a lane 1 are used as the first lane group, to transmit all window data of an area 1 to an area 38 of the WeChat application window 10, and a lane 2 and a lane 3 are used as the second lane group, to transmit all window data of an area 39 to an area 72 of the video application window 20.

In a possible implementation, if an area of a window in the first window group is large, and consequently a bandwidth of the first lane group does not meet a transmission requirement, and a difference between the bandwidth and a bandwidth that meets the requirement falls in a specific range, for example, the difference is less than or equal to a first threshold, a size of the window may be automatically adjusted, for example, the window is zoomed out based on a preset adjustment range, so that the current bandwidth of the first lane group can meet the transmission requirement of the first window group.

According to the method, a size of a window displayed in the split-screen manner can be dynamically and automatically adjusted, and the size of the window can be adjusted and limited in a preset range, to meet a requirement for a transmission bandwidth of window data with no impact on visual experience of the user. In this way, according to the method provided in this embodiment of this application, window data with different refresh rates is independently transmitted based on groups, and the system can perform a process of refreshing, layer composition, drawing, rendering, and presentation on the window data at the refresh rates of windows, thereby lowering power consumption of the system and saving system performance.

In another possible implementation, if an area of a window in the first window group is large, and consequently a bandwidth of the first lane group does not meet a transmission requirement, and a difference between the bandwidth and a bandwidth that meets the requirement is greater than the first threshold, zooming out the window based on a preset adjustment range still cannot meet the transmission requirement of the first window group. In this case, a lane grouping manner may be adjusted until the lane resources can meet all grouped windows. For example, the lane 0, the lane 1, and the lane 2 are used as the first lane group to transmit the window data of the first window group, and the lane 3 is used as the second lane group to transmit the window data of the second window group.

It should be understood that, in a DSC technology, in a process related to compression and decompression of an image block, a quantity of DSC slices slices is considered, and adjustment of a size of each window may take a size of a compressed image block into consideration. For example, the size of each window may be adjusted to be aligned with a size of a compressed image block. In addition, an image size in each window needs to meet an alignment requirement for slice slice transmission. For example, a height is a multiple of 4. If a size of a window does not meet a size requirement of a compressed block, automatic window size adjustment may be performed on the size of the window. Details are not described herein.

The foregoing describes the manner of automatically adjusting a size of a window in a preset range and adjustment of a lane grouping manner, to meet a transmission requirement of the window data of all the grouped windows. It should be understood that the foregoing manners may be separately used or used in combination. This is not limited in this embodiment of this application.

607: When the lane resources can meet independent transmission of window data of different window groups, set a group-based transmission sequence for window data to be received by a DDIC of the display, a location area of each window group, a window size, a compression mode, an MIPI transmission rate, and the like.

Optionally, for example, the foregoing parameters may be determined based on factors such as a window size of each window group, a corresponding refresh rate, a quantity of lanes in each group, and a maximum MIPI transmission rate. It should be understood that a manner of setting the parameters is not limited in this embodiment of this application.

608: The DDIC of the display receives window data of each group based on the transmission sequence of grouped windows, and independently performs a process of refreshing, layer composition, drawing, rendering, and display based on different groups, to display a plurality of windows on the display.

609: End.

Displaying a plurality of windows in the split-screen manner is used as an example in the foregoing step 601 to step 609, to describe a process of separately refreshing, drawing, rendering, and presenting the plurality of different windows at refresh rates required by the windows. In this process, all the windows may be presented at the refresh rates corresponding to the windows, and there is no need to present all the windows at a highest refresh rate, thereby lowering power consumption of the system and saving system performance. In addition, in the window display process described above, a process of automatically combining and allocating a plurality of lanes and performing concurrent transmission in the plurality of lanes can be implemented without participation by the user. The plurality of windows are displayed at lower power consumption without perception by the user, thereby simplifying a window display procedure, lowering power consumption of the system, and improving user experience.

For the foregoing step 606, when it is determined that the lane resources cannot be allocated based on groups to independently transmit window data of different window groups, a process of the following step 610 to step 612 is performed.

610: Unify refresh rates of the plurality of windows as a high refresh rate and merge the plurality of windows into a full-screen picture. For example, according to the processes described in FIG. 3 (a) to FIG. 4(c), the refresh rates of the WeChat application window 10 and the video application window 20 are unified as a high refresh rate of 90 Hz, and the WeChat application window 10 and the video application window 20 are merged into a full-screen picture.

611: Cooperatively transmit image data of the full-screen picture on a plurality of lane resource groups.

612: After receiving the image data of the full-screen layer, the DDIC of the display performs full-screen refreshing, drawing, rendering, and display.

In a possible implementation, if a manner of automatically adjusting a size of a window in a preset range and/or adjustment of a lane grouping manner cannot meet requirements for transmitting window data of all grouped windows, that is, bandwidths of some windows cannot meet requirements in any lane allocation manner, a lane resource grouping operation provided in this embodiment of this application is not performed. Instead, according to the method described in FIG. 4(a) to FIG. 4(c), an existing mode is maintained, so that all windows obtained by screen splitting are merged into a full-screen picture, and then window data is uniformly transmitted in a plurality of lane groups according to the method shown in FIG. 4(c).

According to the descriptions of the process of the foregoing step 610 to step 612, when the lane resources cannot be allocated based on groups to independently transmit window data of different window groups, the system may automatically switch to an implementation process in which after all windows obtained by screen splitting are merged into a full-screen picture, window data of the full-screen picture is uniformly transmitted in a plurality of lane groups, to provide a plurality of possible implementation solutions for the window display process, to adapt to multi-window display requirements in different scenarios. In addition, the switching process requires no participation by the user, and normal display of the plurality of windows is ensured without perception by the user, thereby improving user experience.

For the foregoing step 602, when the refresh rates of the plurality of to-be-displayed windows are the same, window display may alternatively be performed based on the process of step 610 to step 612. Specifically, when the system determines that the refresh rates of the plurality of to-be-displayed windows are the same, the system may automatically switch to an implementation process in which after all windows obtained by screen splitting are merged into a full-screen picture, window data of the full-screen picture is uniformly transmitted in a plurality of lane groups, to provide a plurality of possible implementation solutions for the window display process.

In conclusion, when an electronic device displays a plurality of windows in the split-screen manner, a plurality of different window display schemes are provided for different scenarios in this embodiment of this application. The system may automatically switch between the different window display schemes based on a current scenario, to meet multi-window display requirements in different scenarios. Specifically, in a first case, when refresh rates corresponding to the plurality of windows are different, the plurality of windows are grouped based on the different refresh rates, and the plurality of lanes included in the lane module are automatically combined and allocated, so that window data of one window group can be transmitted in each lane group, to implement a process of separately refreshing, drawing, rendering, and presenting the plurality of different windows at the refresh rates required by the windows. In this process, all the windows may be presented at the refresh rates corresponding to the windows, and there is no need to present all the windows at a highest refresh rate, thereby lowering power consumption of the system and saving system performance. In a second case, if the lane resources cannot be allocated based on groups to independently transmit window data of different window groups, or when refresh rates of the plurality of to-be-displayed windows are the same, after all the windows obtained by screen splitting are merged into a full-screen picture, the window data of the full-screen picture is uniformly transmitted in a plurality of lane groups. The foregoing solutions provide a plurality of possible implementation solutions for window display processes in different scenarios, and can implement display of a plurality of windows at lower power consumption without participation by the user or perception by the user, thereby simplifying a window display procedure, lowering power consumption of the system, and improving user experience.

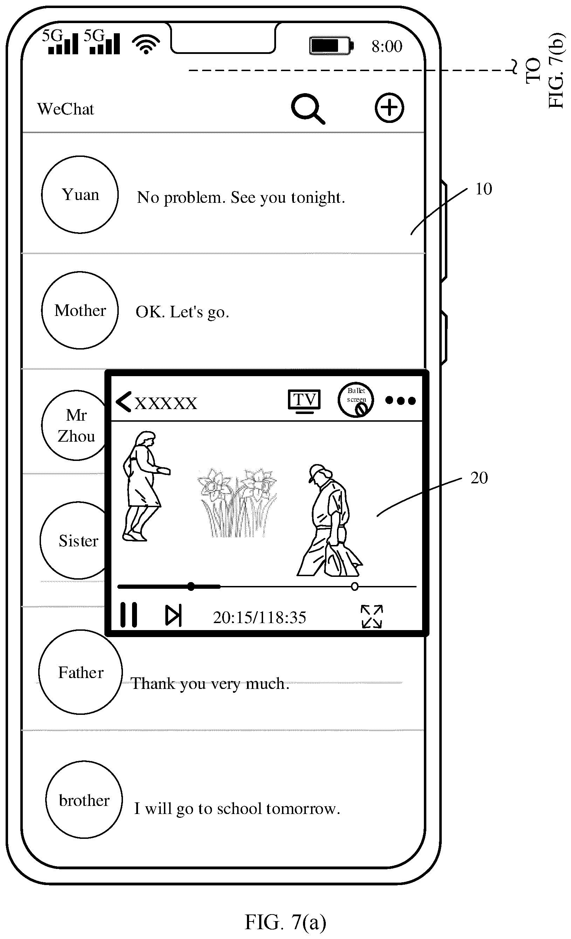

FIG. 7(a) to FIG. 7(c)(2) are a schematic diagram of another window display process according to an embodiment of this application. FIG. 3(a) to FIG. 6 describe a process in which when different windows are displayed in a split-screen manner of a mobile phone, the multi-window display may further include a picture-in-picture (picture-in-picture, PIP) display scenario with overlapped windows. The following describes a PIP multi-window display process with reference to FIG. 7(a) to FIG. 9.

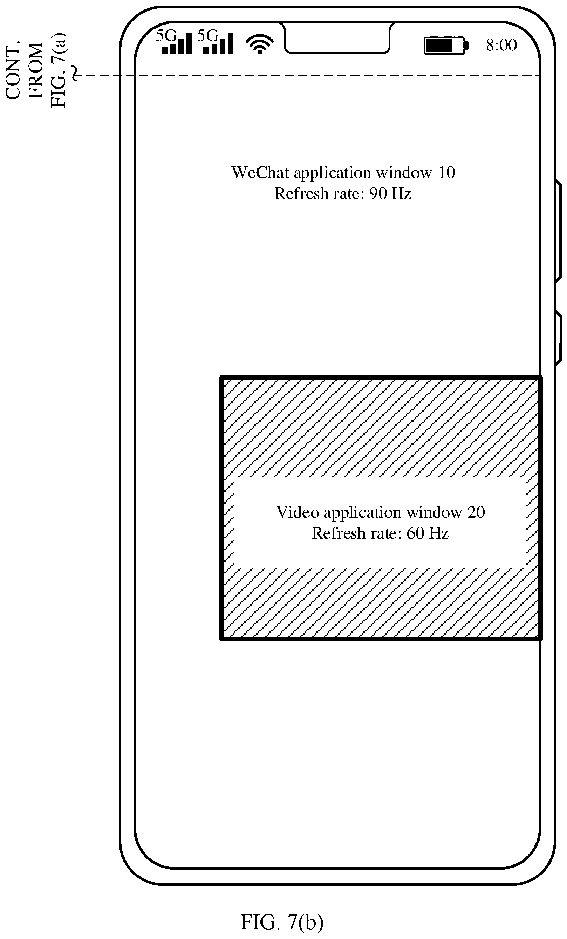

As shown in FIG. 7(a), a WeChat application window 10 is displayed on a main interface of a display of the mobile phone, and a video application window 20 is displayed above the WeChat application window 10 in a hovering manner. In this embodiment of this application, as shown in FIG. 7(b), the WeChat application window 10 corresponds to a refresh rate of 90 Hz, and the video application window 20 corresponds to a refresh rate of 60 Hz. In this scenario, a process of refreshing, drawing, rendering, and presentation may also be performed on window data of the WeChat application window 10 and the video application window 20 based on the different refresh rates respectively corresponding to the two windows.

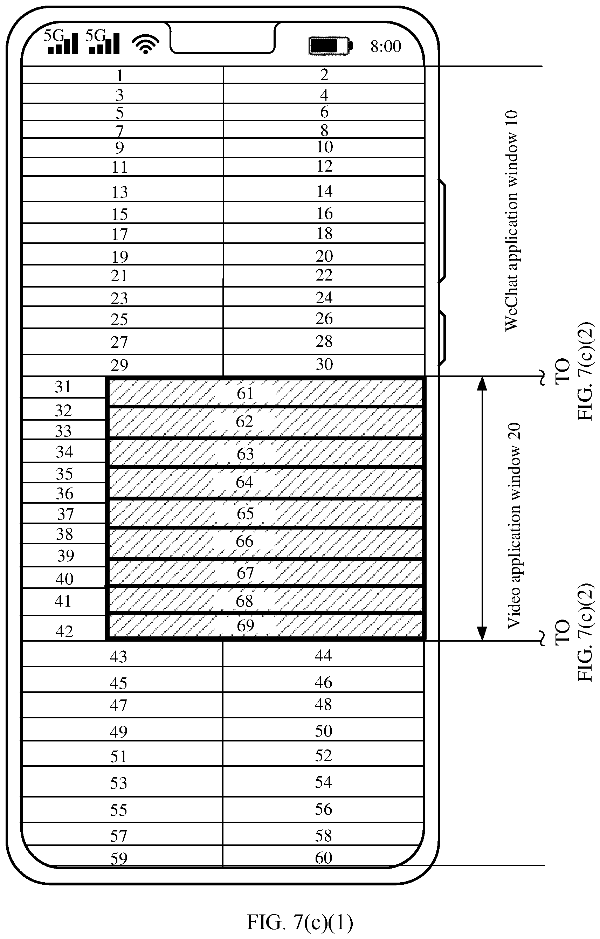

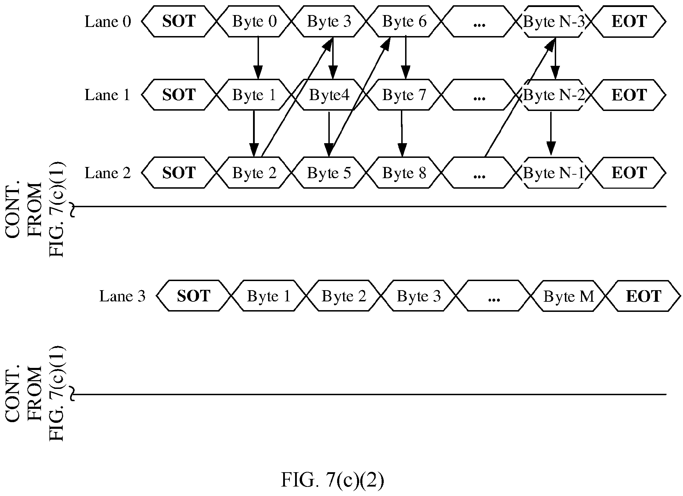

For example, as shown in FIG. 7(c)(1) and FIG. 7(c)(2), a lane 0, a lane 1, a lane 2, and a lane 3 are divided into two groups. The lane 0, the lane 1, and the lane 2 form a first lane group to transmit window data of the WeChat application window 10. The lane 3 forms a second lane group to transmit window data of the video application window 20. Each window may be segmented according to the area segmentation manner described in FIG. 4(a) to FIG. 4(c). For example, the WeChat application window 10 is segmented into an area 1 to an area 60 based on a size of 60*540. The video application window 20 occupies a size of 900*960 (unit: pixel), and is segmented into an area 61 to an area 69 based on a size of 100*960.

In a possible implementation, when two windows have a blocking relationship and have an overlapping part, in a display process, a blocked area may be removed. For example, as shown in FIG. 7(c)(1) and FIG. 7(c)(2), an area in which the video application window 20 is located blocks a partial area of the WeChat application window 10. In a window display process, window data of the video application window 20 can be normally transmitted, but window data of the blocked WeChat application window 10 in the area in which the video application window 20 is located may be discarded. In other words, a part in which the area 31 to the area 42 in the figure are located does not include an area blocked by the video application window. The window data of the WeChat application window 10 is transmitted in a first lane group, and the window data of the video application window 20 is transmitted in a second lane group. This manner reduces a window data volume of the WeChat application window 10 and can reduce data transmission load.

Particularly, when the window data of the WeChat application window 10 is transmitted in the first lane group, if a bandwidth is insufficient, window data included in the blocked area is discarded by using the method described above, so that a bandwidth requirement of the WeChat application window 10 can be met. In addition, the WeChat application window 10 and the video application window 20 are allowed to be presented at refresh rates corresponding to the WeChat application window 10 and the video application window 20, and there is no need to present all the windows at a highest refresh rate, thereby lowering power consumption of a system and saving system performance.

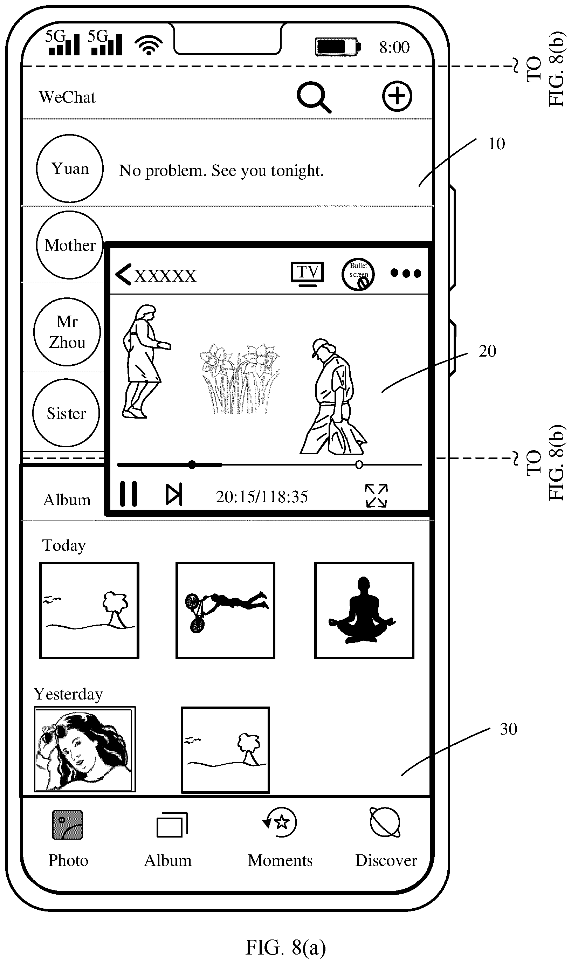

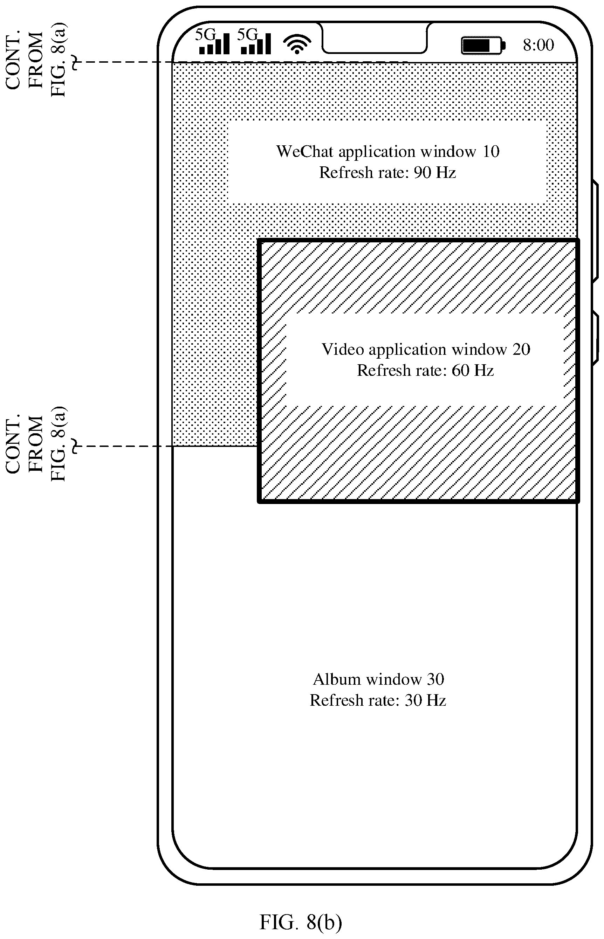

FIG. 8(a) to FIG. 8(c)(2) are a schematic diagram of another window display process according to an embodiment of this application. As shown in FIG. 8(a), a WeChat application window 10 and an album window 30 are first displayed on a main interface of a display of a mobile phone in a split-screen manner. A video application window 20 is displayed above the WeChat application window 10 and the album window 30 in a hovering manner. The video application window 20 has a partial overlapping area with each of the WeChat application window 10 and the album window 30. As shown in FIG. 8(b), the WeChat application window 10 corresponds to a refresh rate of 90 Hz, the video application window 20 corresponds to a refresh rate of 60 Hz, and the album window 30 corresponds to a refresh rate of 30 Hz.

In a possible implementation, windows having a blocking relationship may be first merged, and finally an unblocked merged area is formed. Then, lanes are allocated to window data in the merged area obtained after merging and having no inclusion relationship, so that the window data is concurrently transmitted in the lanes.

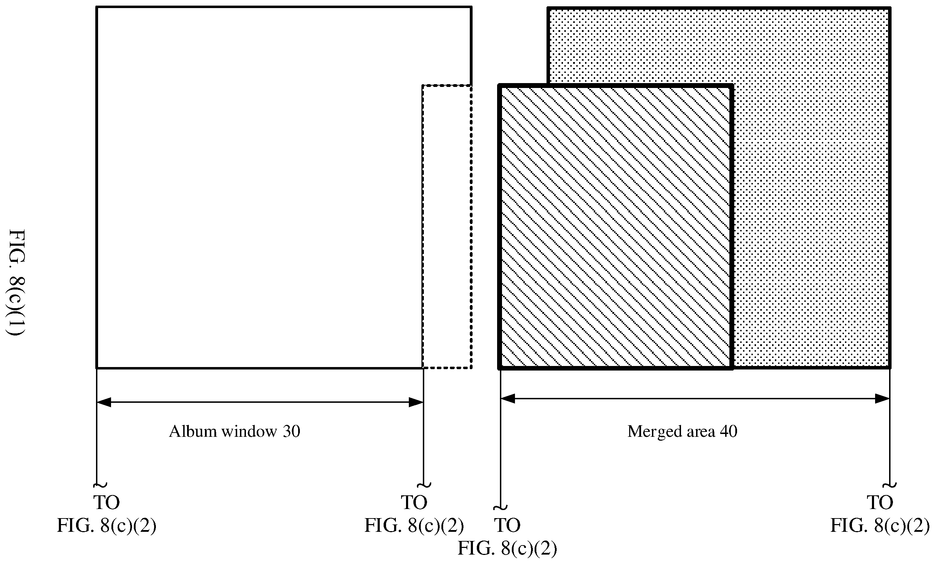

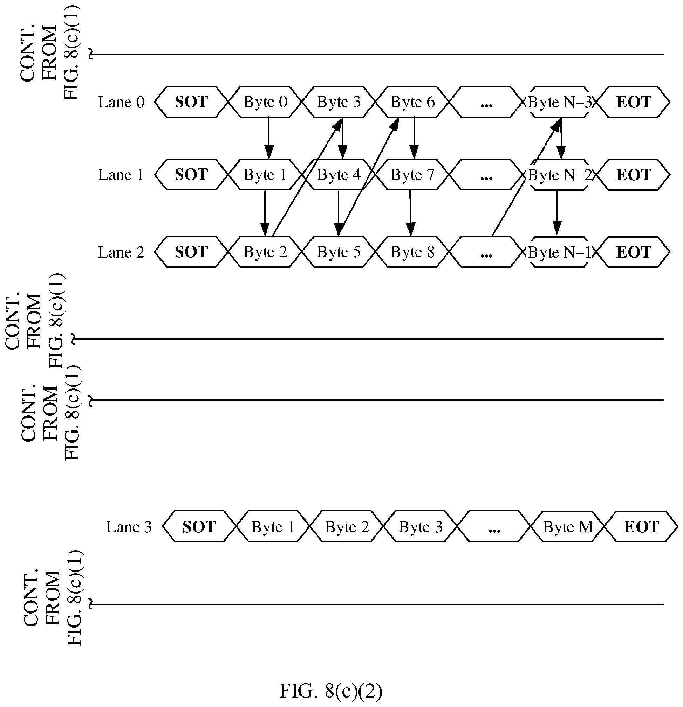

For example, as shown in FIG. 8(c)(1) and FIG. 8(c)(2), the WeChat application window 10 and the video application window 20 may be first merged, to obtain an unblocked merged area 40, and window data included in the merged area 40 is transmitted in a first lane group. Window data of the album window 30 is independently transmitted in a second lane group.

Optionally, when a lane bandwidth meets a requirement, the window data of the album window 30 may include an area that is shown by a dashed line box and that is blocked by the video application window 20. The window data of the album window 30 may alternatively not include the area that is shown by the dashed line box and that is blocked by the video application window 20, so that a data transmission volume can be reduced, and system performance can be improved.

In another possible implementation, a process of refreshing, drawing, rendering, and presentation may also be performed on window data of the WeChat application window 10, the video application window 20, and the album window 30 based on different refresh rates respectively corresponding to the three windows according to the methods described in FIG. 5(a) to FIG. 6. Details are not described herein.

In still another possible implementation, in a process of displaying a plurality of windows, after a user drags a window and consequently a location of the window is changed, a system may obtain window areas through re-division and automatically allocate different lanes based on a new window location, a new location relationship and a new overlapping relationship of the plurality of windows, and the like according to the solutions described in FIG. 7 (a) to FIG. 8(c)(2), and refresh, draw, render, and present window data of each area according to a new transmission solution, without participation by the user. The plurality of windows are displayed at lower power consumption without perception by the user, thereby simplifying a window display procedure and improving user experience.

Alternatively, when the user adjusts a size of a window by using an operation such as dragging of a frame of the window, a system may obtain window areas through re-division and automatically allocate different lanes based on a new window size, a new location relationship and a new overlapping relationship of the plurality of windows, and the like according to the solutions described in FIG. 7(a) to FIG. 8(c)(2), or automatically merge the plurality of windows into a full-screen picture and present the full-screen picture in cooperation with a plurality of lanes, that is, refresh, draw, render, and present window data of each area according to a new transmission solution, without participation by the user. The plurality of windows are displayed at lower power consumption without perception by the user, thereby simplifying a window display procedure and improving user experience.

Alternatively, a system may automatically adjust a size of a window, for example, zoom out the window based on a preset adjustment range, so that a bandwidth of a lane module can meet a current data transmission requirement of the plurality of windows. For example, if an area of a window in a first window group is large, and consequently a bandwidth of the first lane group does not meet a transmission requirement, and a difference between the bandwidth and a bandwidth that meets the requirement falls in a specific range, for example, the difference is less than or equal to a first threshold, a size of the window can be automatically adjusted, so that the bandwidth of the first lane group can meet a data transmission requirement of the first window group. In this case, a size of a window may be automatically adjusted, and the system refreshes, draws, renders, and presents window data based on an adjusted window, without participation by the user. The plurality of windows are displayed to the user without perception by the user, and the windows are displayed at lower power consumption, thereby improving user experience.

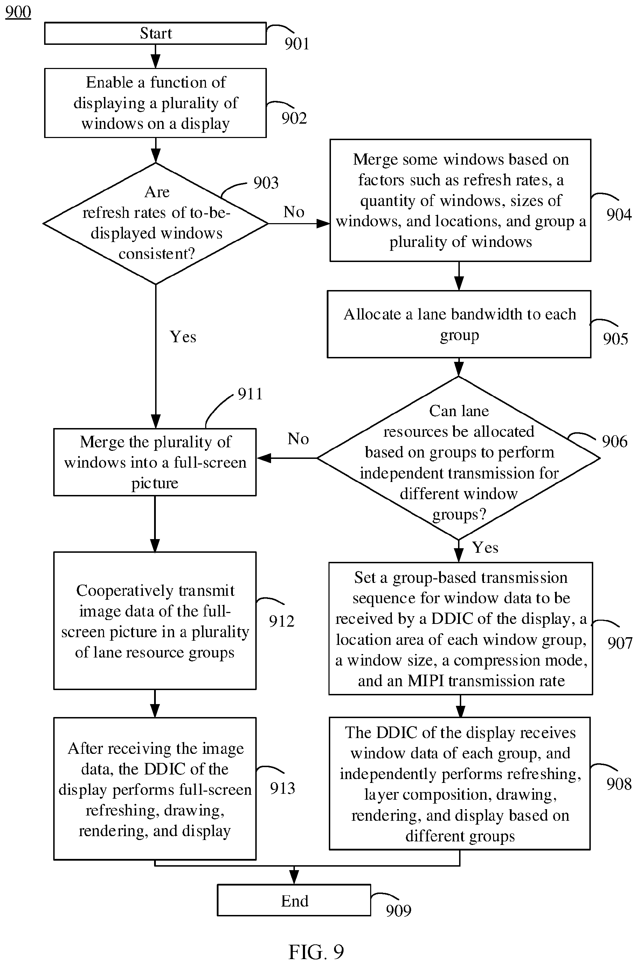

FIG. 9 is a schematic flowchart of another window display process according to an embodiment of this application. Based on the window display processes described in FIG. 7(a) to FIG. 8(c)(2), the following describes a specific implementation process with reference to FIG. 9. As shown in FIG. 9, the method 900 may be cooperatively performed by a plurality of software and hardware modules such as the HWC, the window manager, the three-dimensional graphics processing library, and the display module under control by the processor of the mobile phone. The method 900 includes the following steps.

901: Start.

902: Enable a function of displaying a plurality of windows on a display.

It should be understood that in the embodiments described in FIG. 8(a) to FIG. 9, displaying a plurality of windows herein may be a scenario including both split-screen display and PIP overlapped-display. In the scenario including both split-screen display and PIP overlapped-display, the plurality of windows may be displayed according to the methods described in FIG. 5(a) to FIG. 6, or may be displayed according to the methods described in FIG. 8(a) to FIG. 9. This is not limited in this embodiment of this application.

903: Determine whether refresh rates of to-be-displayed windows are consistent.

904: When the refresh rates of the to-be-displayed windows are different, merge some windows based on factors such as refresh rates of the windows, a quantity of windows, sizes of the windows, and locations, and group the plurality of windows.

It should be understood that, this process is different from step 604 described in FIG. 6. In step 604, in a split-screen display scenario in which windows have no overlapping area, a plurality of windows are grouped based on whether refresh rates are the same, and refresh rates of windows in a same group are the same. In step 904, in addition to the refresh rates of the windows, a plurality of factors such as the quantity of windows, the sizes of the windows, and the display locations are considered in a window grouping manner.

For example, in the two windows shown in FIG. 7(a) to FIG. 7(c)(2), a quantity of windows is small, and lanes can meet a requirement for separately transmitting window data of the two windows. The windows may not be merged, and are divided into two groups. Lanes of a quantity are allocated to each group, to independently transmit window data of the group.

Alternatively, for example, in the three windows shown in FIG. 8(a) to FIG. 8(c)(2), the video application window 20 has an overlapping area with each of the album window 30 and the WeChat application window 10, and refresh rates of the three windows are different. If the three windows are divided into three groups, four lanes cannot meet a bandwidth requirement for independent transmission of the three windows regardless of allocation. Two windows may be merged, and then a window obtained after merging may be grouped. Considering that the video application window 20 and the WeChat application window 10 have a large overlapping area, the video application window 20 and the WeChat application window 10 may be merged, to obtain a merged area 40. The merged area 40 is used as a first window group, corresponding to a high refresh rate of 90 Hz. The album window 30 is used as a second window group, corresponding to a refresh rate of 30 Hz.

Optionally, in a process of grouping a plurality of windows, refresh rates of the windows and sizes of the windows may be preferentially considered. If window data included in each window in windows with a same refresh rate does not reach an upper limit of a transmission bandwidth of a lane group, these windows may be grouped into one group, and the lane group may be shared to transmit the window data. For windows with different refresh rates, the windows with different refresh rates are divided as far as possible into different groups based on the different refresh rates, and window data is transmitted in different lanes, to implement different MIPI transmission rates of different window groups, to further meet requirements in different scenarios.

In the foregoing manner of merging some windows, it can be ensured that a window (for example, the album window 30) with a low refresh rate still maintains the low refresh rate of the window, and there is no need to merge all windows into a full-screen picture for refreshing, drawing, rendering, and presentation. In this way, power consumption of the system can be reduced to some extent, and system performance can be saved.

905: Allocate a lane bandwidth to each group.

906: Determine whether lane resources can be allocated based on groups to independently transmit window data of different window groups.

907: When the lane resources can meet independent transmission of window data of different window groups, set a group-based transmission sequence for window data to be received by a DDIC of the display, a location area of each window group, a window size, a compression mode, an MIPI transmission rate, and the like.

908: The DDIC of the display receives window data of each group based on the transmission sequence of grouped windows, and independently performs a process of refreshing, layer composition, drawing, rendering, and display based on different groups, to display a plurality of windows on the display.

909: End.

It should be understood that, for the foregoing same execution process, refer to the detailed descriptions in the method 600. Details are not described herein.

It should be further understood that, in the foregoing step 901 to step 909, a method for grouping a plurality of different windows is described by using an example in which a plurality of windows have an overlapping display area. Then, a process of separately refreshing, drawing, rendering, and presenting different groups based on refresh rates may be performed. This process can save system performance. In addition, in the window display process described above, a process of automatically combining and allocating a plurality of lanes and performing concurrent transmission in the plurality of lanes can be implemented without participation by the user. The plurality of windows are displayed at lower power consumption without perception by the user, thereby simplifying a window display procedure, lowering power consumption of the system, and improving user experience.

For the foregoing step 906, after some windows are merged, if the lane resources cannot be allocated based on groups to independently transmit window data of different window groups, a process of the following step 910 to step 912 is performed.

910: Unify refresh rates of the plurality of windows as a high refresh rate and merge the plurality of windows into a full-screen picture.

For example, according to the processes described in FIG. 3(a) to FIG. 4(c), the refresh rates of the WeChat application window 10, the video application window 20, and the album window 30 are all unified to a high refresh rate of 90 Hz. After the HWC merges the video application window 20 and the album window 30 into a full-screen picture, image data of the full-screen picture is transmitted to the display in a plurality of lane resource groups.

911: Cooperatively transmit image data of the full-screen picture in a plurality of lane resource groups.

912: After receiving the image data of the full-screen layer, the DDIC of the display performs full-screen refreshing, drawing, rendering, and display.

According to the descriptions of the process of the foregoing step 910 to step 912, after some windows are merged, when the lane resources cannot be allocated based on groups to independently transmit window data of different window groups, the system may automatically switch to an implementation process in which after all windows obtained by screen splitting are merged into a full-screen picture, window data of the full-screen picture is uniformly transmitted in a plurality of lane groups, to provide a plurality of possible implementation solutions for the window display process, to adapt to multi-window display requirements in different scenarios. In addition, the switching process requires no participation by the user, and normal display of the plurality of windows is ensured without perception by the user, thereby improving user experience.

Similarly, for the foregoing step 902, when refresh rates of a plurality of to-be-displayed windows having an overlapping area are all the same, window display may alternatively be performed based on the process of step 910 to step 912. Specifically, when the system determines that the refresh rates of the plurality of to-be-displayed windows are the same, the system may automatically switch to an implementation process in which after all windows obtained by screen splitting are merged into a full-screen picture, window data of the full-screen picture is uniformly transmitted in a plurality of lane groups, to provide a plurality of possible implementation solutions for the window display process.

In conclusion, when an electronic device displays the plurality of windows in the split-screen manner, and the plurality of windows have an overlapping area, a plurality of different window display schemes are provided for different scenarios in this embodiment of this application. The system may automatically switch between different window display schemes based on a current scenario, to meet multi-window display requirements in different scenarios. Specifically, some windows may be merged based on factors such as refresh rates of the windows, a quantity of windows, sizes of the windows, and locations, and then a window obtained after merging is grouped. In addition, a plurality of lanes included in a lane module are automatically combined and allocated, so that window data of one window group can be transmitted in each lane group. In this way, some windows can be presented at a low refresh rate to some extent, and there is no need to present all the windows at a highest refresh rate, thereby lowering power consumption of the system and saving system performance.

The foregoing solutions provide a plurality of possible implementation solutions for window display processes in different scenarios, and can implement display of a plurality of windows at lower power consumption without participation by the user or perception by the user, thereby simplifying a window display procedure, lowering power consumption of the system, and improving user experience.

It can be understood that, to implement the foregoing functions, the electronic device includes corresponding hardware and/or software modules for executing the functions. With reference to algorithm steps of the examples described in the embodiments disclosed in this specification, this application can be implemented by hardware or a combination of hardware and computer software. Whether a function is performed by hardware or hardware driven by computer software depends on a particular application and a design constraint of the technical solutions. A person of ordinary skill in the art may use different methods to implement the described functions for each particular application, but it should not be considered that the implementation goes beyond the scope of this application.

In the embodiments, the electronic device may be divided into functional modules according to the foregoing method example. For example, each functional module may be obtained through division corresponding to each function, or two or more functions may be integrated into one processing module. The integrated modules may be implemented in a form of hardware. It should be noted that, in embodiments, division into the modules is an example and is merely logical function division, and there may be another division manner during actual implementation.

When each functional module is obtained through division corresponding to each function, the electronic device may include a display unit, a detection unit, and a processing unit. It should be noted that, all related content of steps in the foregoing method embodiments may be cited in function descriptions of corresponding functional modules. Details are not described herein again.

The electronic device provided in the embodiments is configured to perform the foregoing video playback method. Therefore, an effect the same as that of the foregoing implementation method can be achieved.

When an integrated unit is used, the electronic device may include a processing module, a storage module, and a communications module. The processing module may be configured to control and manage an action of the electronic device, for example, may be configured to support the electronic device in performing steps performed by the display unit, the detection unit, and the processing unit. The storage module may be configured to support the electronic device in storing program code, data, and the like. The communications module may be configured to support the electronic device in communicating with another device.

The processing module may be a processor or a controller. The processing module may implement or execute logical blocks, modules, and circuits in various examples described with reference to content disclosed in this application. The processor may also be a combination implementing computing functions, for example, a combination of one or more microprocessors, or a combination of a digital signal processor (digital signal processing, DSP) and a microprocessor. The storage module may be a memory. The communications module may be specifically a device that interacts with another electronic device such as a radio frequency circuit, a Bluetooth chip, or a Wi-Fi chip.

In an embodiment, when the processing module is a processor, and the storage module is a memory, the electronic device in this embodiment may be a device having the structure shown in FIG. 1.

An embodiment further provides a computer readable storage medium. The computer readable storage medium stores computer instructions. When the computer instructions are run on an electronic device, the electronic device is enabled to perform the foregoing related method steps, to implement the method for displaying a plurality of windows in the foregoing embodiments.

An embodiment further provides a computer program product. When the computer program product is run on a computer, the computer is enabled to perform the foregoing related steps, to implement the method for displaying a plurality of windows in the foregoing embodiments.

In addition, an embodiment of this application further provides an apparatus. The apparatus may be specifically a chip, a component, or a module. The apparatus may include a processor and a memory that are connected. The memory is configured to store computer executable instructions. When the apparatus runs, the processor may execute the computer executable instructions stored in the memory, so that the chip performs the method for displaying a plurality of windows in the foregoing method embodiments.

The electronic device, the computer readable storage medium, the computer program product, or the chip provided in the embodiments are all used to perform the corresponding methods provided above. Therefore, for beneficial effects that can be achieved by the electronic device, the computer readable storage medium, the computer program product, or the chip, refer to beneficial effects in the corresponding methods provided above. Details are not described herein.

The foregoing descriptions about implementations allow a person skilled in the art to clearly understand that, for the purpose of convenient and brief description, division into the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatuses and methods may be implemented in other manners. For example, the described apparatus embodiment is merely an example. For example, division into the modules or the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for displaying a plurality of windows, wherein the method is applied to an electronic device comprising a display, and the method comprises:
displaying a plurality of windows on the display, wherein the plurality of windows comprise a first window and a second window, and a first refresh rate corresponding to the first window is greater than a second refresh rate corresponding to the second window;
obtaining to-be-transmitted window data of the first window and to-be-transmitted window data of the second window;
determining a first lane set in a plurality of transmission lanes based on the to-be-transmitted window data of the first window and determining a second lane set in the plurality of transmission lanes based on the to-be-transmitted window data of the second window, wherein the first lane set and the second lane set comprise different transmission lanes;
when a bandwidth of a transmission lane in the first lane set meets a transmission requirement of the window data of the first window, and a bandwidth of a transmission lane in the second lane set meets a transmission requirement of the window data of the second window, transmitting the window data of the first window to the display through the first lane set, and transmitting the window data of the second window to the display through the second lane set; and
drawing and displaying the first window on the display based on the first refresh rate and drawing and displaying the second window on the display based on the second refresh rate.

2. The method according to claim 1, wherein when the bandwidth of the transmission lane in the first lane set is less than a bandwidth at which the window data of the first window is transmitted, and/or the bandwidth of the transmission lane in the second lane set is less than a bandwidth at which the window data of the second window is transmitted, the method further comprises:
merging the window data of the first window and the window data of the second window, and transmitting merged window data to the display through the plurality of transmission lanes; and
drawing and displaying the first window and the second window on the display based on the first refresh rate and the merged window data.

3. The method according to claim 1, wherein
when the bandwidth of the transmission lane in the first lane set is less than a bandwidth at which the window data of the first window is transmitted, and a difference between the bandwidth at which the window data of the first window is transmitted and the bandwidth of the transmission lane in the first lane set is less than or equal to a first threshold, the method further comprises:
zooming out the first window in a preset adjustment range, so that the bandwidth of the transmission lane in the first lane set is greater than or equal to the bandwidth at which the window data of the first window is transmitted;
and/or
when the bandwidth of the transmission lane in the second lane set is less than a bandwidth at which the window data of the second window is transmitted, and a difference between the bandwidth at which the window data of the second window is transmitted and the bandwidth of the transmission lane in the second lane set is less than or equal to the first threshold, the method further comprises:
zooming out the second window in the preset adjustment range, so that the bandwidth of the transmission lane in the second lane set is greater than or equal to the bandwidth at which the window data of the second window is transmitted.

4. The method according to claim 3, wherein the zooming out the first window or the zooming out the second window comprises:
automatically zooming out the first window or the second window; or
detecting a first operation of a user, and zooming out the first window or the second window in response to the first operation.

5. The method according to any one of claims 1 to 4, wherein the first window and the second window have no overlapping area; or
the first window and the second window have an overlapping area.

6. The method according to claim 5, wherein when the first window and the second window have an overlapping area, the method further comprises:
obtaining information about a display hierarchy of the first window and the second window; and
when the second window is displayed at an upper layer of the first window, determining to-be-transmitted data comprised in an area other than the overlapping area in the first window; and
determining the first lane set in the plurality of transmission lanes based on the to-be-transmitted data; or
when the first window is displayed at an upper layer of the second window, determining to-be-transmitted data comprised in an area other than the overlapping area in the second window; and
determining the second lane set in the plurality of transmission lanes based on the to-be-transmitted data.

7. The method according to any one of claims 1 to 6, wherein the first window and the second window are different interfaces of a same application; or
the first window and the second window are different interfaces of different applications.

8. The method according to any one of claims 1 to 7, wherein
a rate at which the window data of the first window is transmitted in the first lane set is different from a rate at which the window data of the second window is transmitted in the second lane set; and/or
a compression manner of the window data of the first window is different from a compression manner of the window data of the second window.

9. An electronic device, comprising:
a display;
one or more processors;
one or more memories; and
a module on which a plurality of applications are installed, wherein
the memory stores one or more programs, the one or more programs comprise instructions, and when the instructions are executed by the electronic device, the electronic device is enabled to perform the method for displaying a plurality of windows according to any one of claims 1 to 8.

10. A computer readable storage medium, wherein the computer readable storage medium stores computer instructions, and when the computer instructions are run on an electronic device, the electronic device is enabled to perform the method for displaying a plurality of windows according to any one of claims 1 to 8.
